(19) **Europäisches Patentamt European Patent Office Office européen des brevets**

(11) **EP 4 635 700 A1**

(12) **EUROPEAN PATENT APPLICATION**
published in accordance with Art. 153(4) EPC

(43) Date of publication:
**22.10.2025 Bulletin 2025/43**

(21) Application number: **23903559.5**

(22) Date of filing: **14.12.2023**

(51) International Patent Classification (IPC):
**B29B 9/14** *(2006.01)* **B01J 2/10** *(2006.01)*
**B01J 2/12** *(2006.01)* **B01J 2/28** *(2006.01)*
**B29B 9/08** *(2006.01)* **C08J 5/04** *(2006.01)*
**C08K 3/013** *(2018.01)* **C08K 7/02** *(2006.01)*
**C08L 101/00** *(2006.01)* **D01G 9/02** *(2006.01)*
**D06M 101/40** *(2006.01)*

(52) Cooperative Patent Classification (CPC):
**B01J 2/10; B01J 2/12; B01J 2/28; B29B 9/08;**
**B29B 9/14; C08J 5/04; C08K 3/013; C08K 7/02;**
**C08L 101/00; D01G 9/02;** D06M 2101/40

(86) International application number:
**PCT/JP2023/044781**

(87) International publication number:
**WO 2024/128275 (20.06.2024 Gazette 2024/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.12.2022 JP 2022200735**
**16.12.2022 JP 2022201050**

(71) Applicant: **Mitsubishi Chemical Corporation**
**Tokyo 100-8251 (JP)**

(72) Inventors:
• **TSUJIKAWA Kazuki**
  **Tokyo 100-8251 (JP)**
• **ISHIKAWA Takeshi**
  **Tokyo 100-8251 (JP)**
• **MATSUI Jun**
  **Tokyo 100-8251 (JP)**
• **IKEDA Masashi**
  **Tokyo 100-8251 (JP)**

(74) Representative: **Vossius & Partner**
**Patentanwälte Rechtsanwälte mbB**
**Siebertstrasse 3**
**81675 München (DE)**

(54) **PARTICLE-CONTAINING FIBER BUNDLE PRODUCTION METHOD AND PARTICLE-CONTAINING FIBER BUNDLE**

(57) A particle-containing fiber bundle having high uniformity and further improved feed efficiency, and a production method of the same are provided. The particle-containing fiber bundle production method of the present invention is for producing a particle-containing fiber bundle having a prolate spheroidal shape or a strand shape, the production method including a step of mixing a plurality of shortened fibers, particles having a median diameter of 100 μm or less, an organic binder, and a liquid, in which the fibers include carbon fibers, and the particles are used in an amount of 10 parts by mass or more with respect to 100 parts by mass of the fibers.

**FIG. 5**

1000 μm

**Description**

Field of the Invention

The present invention relates to a particle-containing fiber bundle production method and a particle-containing fiber bundle.

This application claims the benefit of priority of the prior Japanese Patent Application No. JP2022-200735, filed in Japan on December 16, 2022, and the prior Japanese Patent Application No. JP2022-201050, filed in Japan on December 16, 2022, the entire contents of which are incorporated herein by reference.

Background Art

A carbon fiber has been used for various applications as an industrially important material for improving mechanical or electrical properties such as high strength, high rigidity, low specific gravity, high electrical conductivity, and high abrasion resistance, by being mixed and dispersed in a matrix such as a resin.

In general, when a short carbon fiber is mixed and dispersed in various resins to obtain a fiber-reinforced resin composition, a form of the carbon fiber is used such that handling of the carbon fiber is facilitated and work in the mixing and dispersion step is efficient. In particular, it is required that feed of the carbon fiber is carried out to a kneader, a molding die, or the like in a stable and smooth manner. As the method, a method of cutting a continuous carbon fiber bundle obtained by treatment with a sizing agent or the like to obtain so-called chopped carbon fibers, or a method of granulating cut carbon fibers to obtain a carbon fiber bundle is used.

A carbon fiber reinforced thermoplastic can be produced by a method of adding carbon fiber pellets to a thermoplastic resin. As a production method of the carbon fiber pellets, for example, a method of mixing short carbon fibers with a solution or suspension of a sizing agent to form a carbon fiber aggregate, pelletizing the carbon fiber aggregate with a disc pelletizer, and then drying the carbon fiber aggregate is disclosed (Patent Document 1). In this manner, carbon fiber pellets having a high density and a streamlined shape are obtained, and the carbon fibers can be stably and smoothly fed.

As a method of obtaining the carbon fiber pellets using recycled fibers, a method which includes cutting and/or crushing carbon fibers, and mixing the carbon fibers with a solution or suspension in a mixer to obtain an aggregate, bringing the aggregate into contact with an inclined rotating surface to concentrate the aggregate, and drying the aggregate to obtain carbon fiber pellets, where the method includes carrying out thermal decomposition of the carbon fibers before the cutting or crushing, is disclosed (Patent Document 2).

In addition, as a method of improving feed efficiency of the carbon fiber pellets using recycled fibers, a method of producing carbon fiber pellets by rolling a mixture containing carbon fibers and a binder-containing solution in a container, in which the mixture further contains thermoplastic resin fibers, is disclosed (Patent Document 3).

Prior Art Document

Patent Document

Patent Document 1: Published Japanese Translation No. H10-503812 of the PCT International Publication
Patent Document 2: European Patent Application Publication No. 2902433
Patent Document 3: PCT International Publication No. WO2022/210591

Summary of the Invention

Problems to be Solved by the Invention

As a result of examination by the present inventors, it is found that, in the method disclosed in Published Japanese Translation No. H10-503812 of the PCT International Publication, when the recycled fibers are used as the carbon fibers as a raw material, a sufficient feed efficiency may not be obtained.

One of the objects of the present invention is to provide a particle-containing fiber bundle having high uniformity and further improved feed efficiency, and a production method of the same. One of the objects of the present invention is to provide a particle-containing fiber bundle having high uniformity and further improved feed efficiency even when a recycled fiber is used as a carbon fiber as a raw material, and a production method of the same.

Means for Solving Problem

The present invention includes the following embodiments.

[1]: A particle-containing fiber bundle production method of a particle-containing fiber bundle having a prolate spheroidal shape or a strand shape, the production method comprising:

a step of mixing a plurality of shortened fibers, particles having a median diameter of 100 $\mu$m or less, an organic binder, and a liquid,
wherein the fibers include carbon fibers, and
the particles are used in an amount of 10 parts by mass or more with respect to 100 parts by mass of the fibers.

[2]: The particle-containing fiber bundle production method according to [1],
wherein the median diameter of the particles is 3 $\mu$m or more.
[3]: The particle-containing fiber bundle production method according to [1] or [2],
wherein a solubility of the particles in the liquid is 0.01 g/100 g or less.
[4]: The particle-containing fiber bundle production method according to any one of [1] to [3],
wherein a solubility of the particles in water is 0.0001 g/100 g or less.
[5]: The particle-containing fiber bundle production method according to [4],
wherein a solubility of the organic binder in water is more than 0.0001 g/100 g.
[6]: The particle-containing fiber bundle production method according to any one of [1] to [5],
wherein the particles include organic particles.
[7]: The particle-containing fiber bundle production method according to any one of [1] to [6],
wherein the particles are used in an amount of 20 parts by mass or more and 80 parts by mass or less with respect to 100 parts by mass of the fibers.
[8]: The particle-containing fiber bundle production method according to any one of [1] to [7],
wherein the particles are used in an amount of 55 parts by mass or more and 75 parts by mass or less with respect to 100 parts by mass of the fibers.
[9]: The particle-containing fiber bundle production method according to any one of [1] to [8],
wherein the organic binder includes at least one resin selected from the group consisting of a polyamide resin, an epoxy resin, an unsaturated polyester resin, a vinyl ester resin, and a polyurethane resin.
[10]: The particle-containing fiber bundle production method according to any one of [6] to [9],
wherein the organic particles include thermoplastic resin particles.
[11]: The particle-containing fiber bundle production method according to [10],
wherein the thermoplastic resin particles include at least one selected from the group consisting of a polyamide resin, a polyolefin resin, a polyester resin, a polycarbonate resin, a polyether sulfone resin, a polyether ether ketone resin, a polyether imide resin, and a polyphenylene sulfide resin.
[12]: The particle-containing fiber bundle production method according to any one of [6] to [11],
wherein the organic particles include thermosetting resin particles.
[13]: The particle-containing fiber bundle production method according to [12],
wherein the thermosetting resin particles include at least one selected from the group consisting of an epoxy resin, a vinyl ester resin, an unsaturated polyester resin, a cyanate ester resin, a polyimide resin, a maleimide resin, a silicone resin, a melamine resin, a urea resin, an alkyd resin, a urethane resin, and a phenol resin.
[14]: The particle-containing fiber bundle production method according to any one of [6] to [13],
wherein the organic particles include curing agent particles.
[15]: The particle-containing fiber bundle production method according to [14],
wherein the curing agent particles include at least one selected from the group consisting of dicyandiamides, phenols, amines, carboxylic acid anhydrides, thiols, imidazoles, phosphines, peroxides, and organometallic salts.
[16]: The particle-containing fiber bundle production method according to any one of [1] to [15],
wherein the particles include inorganic particles.
[17]: The particle-containing fiber bundle production method according to [16],
wherein the inorganic particles include at least one selected from the group consisting of metal particles, metal oxide particles, silica particles, silicate particles, carbonate particles, sulfate particles, hydroxide particles, glass particles, ceramic particles, graphite, and carbon black.
[18]: The particle-containing fiber bundle production method according to any one of [1] to [17],
wherein a particle diameter D90 at which an integrated value of the particles in a volume-based particle size distribution is 90% is 250 $\mu$m or less.
[19]: The particle-containing fiber bundle production method according to any one of [1] to [18],

wherein a particle diameter D10 at which an integrated value of the particles in a volume-based particle size distribution is 10% is 50 μm or less.

[20]: The particle-containing fiber bundle production method according to any one of [1] to [19], wherein a particle diameter D90 at which an integrated value of the particles in a volume-based particle size distribution is 90% is 0.5 μm or more.

[21]: The particle-containing fiber bundle production method according to any one of [1] to [20], wherein a particle diameter D10 at which an integrated value of the particles in a volume-based particle size distribution is 10% is 0.05 μm or more.

[22]: The particle-containing fiber bundle production method according to any one of [1] to [21], wherein a ratio (D75/D25) of a particle diameter D75 at which an integrated value of the particles in a volume-based particle size distribution is 75% to a particle diameter D25 at which the integrated value is 25% is 1 to 15.

[23]: The particle-containing fiber bundle production method according to any one of [1] to [22], wherein a fiber cotton containing the fiber is used.

[24]: The particle-containing fiber bundle production method according to any one of [1] to [23], wherein an agitation granulator is used.

[25]: The particle-containing fiber bundle production method according to [24], wherein the agitation granulator includes an agitation tank.

[26]: The particle-containing fiber bundle production method according to [25], wherein an agitation blade is provided inside the agitation tank.

[27]: The particle-containing fiber bundle production method according to [25] or [26], wherein the agitation tank includes a scraper.

[28]: The particle-containing fiber bundle production method according to [26] or [27], wherein a distance between the agitation blade and a wall surface of the agitation tank is 1 mm or less.

[29]: The particle-containing fiber bundle production method according to any one of [26] to [28], wherein a distance between the agitation blade and a wall surface of the agitation tank is 10 mm or more.

[30]: The particle-containing fiber bundle production method according to any one of [25] to [29], wherein the agitation tank is rotated.

[31]: The particle-containing fiber bundle production method according to any one of [1] to [30], wherein an average fiber length of the fibers is 12 to 50 mm.

[32]: The particle-containing fiber bundle production method according to any one of [1] to [30], wherein an average fiber length of the fibers is 2 to 12 mm.

[33]: The particle-containing fiber bundle production method according to any one of [1] to [32], wherein a bulk density of the fibers is 0.01 to 0.1 g/cm$^3$.

[34]: The particle-containing fiber bundle production method according to any one of [1] to [33], wherein positions of tips of the fibers constituting the particle-containing fiber bundle are irregular.

[35]: The particle-containing fiber bundle production method according to any one of [1] to [34], wherein a length of the particle-containing fiber bundle is longer than an average fiber length of the fibers contained in the particle-containing fiber bundle.

[36]: The particle-containing fiber bundle production method according to any one of [1] to [35], wherein the particle-containing fiber bundle production method includes mixing the particles, the organic binder, and the liquid to obtain a mixture 1, and mixing the mixture 1 and the fibers to obtain a mixture 2.

[37]: The particle-containing fiber bundle production method according to any one of [1] to [36], further comprising: removing the liquid.

[38]: The particle-containing fiber bundle production method according to any one of [1] to [37], wherein the liquid is used in an amount of 60 to 200 parts by mass with respect to 100 parts by mass of the fibers.

[39]: The particle-containing fiber bundle production method according to any one of [1] to [38], wherein the organic binder is used in an amount of 1 to 40 parts by mass with respect to 100 parts by mass of the fibers.

[40]: The particle-containing fiber bundle production method according to any one of [1] to [39], wherein the particles and the organic binder are used with a mass ratio (mass of particles/mass of organic binder) of the particles to the organic binder being 2.5 to 100.

[41]: A particle-containing fiber bundle production method of a particle-containing fiber bundle having a prolate spheroidal shape or a strand shape, the particle-containing fiber bundle containing a plurality of shortened fibers, particles having a median diameter of 100 μm or less, and an organic binder, wherein the fibers are aligned.

[42]: The particle-containing fiber bundle production method according to [41], wherein the fibers include carbon fibers.

[43]: The particle-containing fiber bundle production method according to [41] or [42], wherein the median diameter of the particles is 3 μm or more.

[44]: The particle-containing fiber bundle production method according to any one of [41] to [43],
wherein a solubility of the particles in water is 0.0001 g/100 g or less.

[45]: The particle-containing fiber bundle production method according to [44],
wherein a solubility of the organic binder in water is more than 0.0001 g/100 g.

[46]: The particle-containing fiber bundle production method according to any one of [41] to [45],
wherein an average fiber length of the fibers is 12 to 50 mm.

[47]: The particle-containing fiber bundle production method according to any one of [41] to [45],
wherein an average fiber length of the fibers is 2 to 12 mm.

[48]: The particle-containing fiber bundle production method according to any one of [41] to [47],
wherein positions of tips of the fibers constituting the particle-containing fiber bundle are irregular.

[49]: The particle-containing fiber bundle production method according to any one of [41] to [48],
wherein a length of the particle-containing fiber bundle is longer than an average fiber length of the fibers contained in the particle-containing fiber bundle.

[50]: The particle-containing fiber bundle production method according to any one of [41] to [49],
wherein a ratio of a length of the particle-containing fiber bundle to an average fiber length of the fibers contained in the particle-containing fiber bundle (length of particle-containing fiber bundle/average fiber length of fibers contained in particle-containing fiber bundle) is 1.1 to 2.5.

[51]: The particle-containing fiber bundle production method according to any one of [41] to [50],
wherein a mass contained amount of the particles in the particle-containing fiber bundle is 20% to 80% by mass.

[52]: The particle-containing fiber bundle production method according to any one of [41] to [51],
wherein a mass contained amount of the organic binder in the particle-containing fiber bundle is 0.5% to 20% by mass.

[53]: The particle-containing fiber bundle production method according to any one of [41] to [52],
wherein a mass ratio (mass of particles/mass of organic binder) of the particles to the organic binder in the particle-containing fiber bundle is 2.5 to 100.

[54]: A particle-containing fiber bundle production method comprising:
mixing a mixture which contains a carbon fiber cotton containing a plurality of shortened fibers, particles having a median diameter of 100 $\mu$m or less, at least one resin selected from the group consisting of a polyamide resin, an epoxy resin, an unsaturated polyester resin, a vinyl ester resin, and a polyurethane resin, and water.

[55]: The particle-containing fiber bundle production method according to [54],
wherein a solubility of the particles in water is 0.0001 g/100 g or less.

[56]: The particle-containing fiber bundle production method according to [54] or [55],
wherein the particles include particles of at least one resin selected from the group consisting of a polyamide resin, a polyether ether ketone resin, a polyether imide resin, a polyphenylene sulfide resin, an epoxy resin, and a vinyl ester resin.

[57]: A particle-containing fiber bundle having a prolate spheroidal shape or a strand shape, comprising:

> a plurality of shortened fibers;
> particles having a median diameter of 100 $\mu$m or less; and
> an organic binder,
> wherein the fibers include carbon fibers, and
> the particles are contained in an amount of 10 parts by mass or more with respect to 100 parts by mass of the fibers.

[58]: The particle-containing fiber bundle according to [57],
wherein the fibers are aligned.

[59]: The particle-containing fiber bundle according to [57] or [58],
wherein the particles include organic particles.

[60]: The particle-containing fiber bundle according to [59],
wherein the organic particles include thermoplastic resin particles.

[61]: The particle-containing fiber bundle according to [60],
wherein the thermoplastic resin particles include at least one selected from the group consisting of a polyamide resin, a polyolefin resin, a polyester resin, a polycarbonate resin, a polyether sulfone resin, a polyether ether ketone resin, a polyether imide resin, and a polyphenylene sulfide resin.

[62]: The particle-containing fiber bundle according to any one of [59] to [61],
wherein the organic particles include thermosetting resin particles.

[63]: The particle-containing fiber bundle according to [62],
wherein the thermosetting resin particles include at least one selected from the group consisting of an epoxy resin, a vinyl ester resin, an unsaturated polyester resin, a cyanate ester resin, a polyimide resin, a maleimide resin, a silicone resin, a melamine resin, a urea resin, an alkyd resin, a urethane resin, and a phenol resin.

[64]: The particle-containing fiber bundle according to any one of [59] to [63],
wherein the organic particles include curing agent particles.

[65]: The particle-containing fiber bundle according to [64],
wherein the curing agent particles include at least one selected from the group consisting of dicyandiamides, phenols, amines, carboxylic acid anhydrides, thiols, imidazoles, phosphines, peroxides, and organometallic salts.

[66]: The particle-containing fiber bundle according to any one of [57] to [65],
wherein the median diameter of the particles is 3 μm or more.

[67]: The particle-containing fiber bundle according to any one of [57] to [66],
wherein an average fiber length of the fibers is 12 to 50 mm.

[68]: The particle-containing fiber bundle according to any one of [57] to [66],
wherein an average fiber length of the fibers is 2 to 12 mm.

[69]: The particle-containing fiber bundle according to any one of [57] to [68],
wherein positions of tips of the fibers constituting the particle-containing fiber bundle are irregular.

[70]: The particle-containing fiber bundle according to any one of [57] to [69],
wherein a length of the particle-containing fiber bundle is longer than an average fiber length of the fibers contained in the particle-containing fiber bundle.

[71]: The particle-containing fiber bundle according to any one of [57] to [70],
wherein a ratio of a length of the particle-containing fiber bundle to an average fiber length of the fibers contained in the particle-containing fiber bundle (length of particle-containing fiber bundle/average fiber length of fibers contained in particle-containing fiber bundle) is 1.1 to 2.5.

[72]: The particle-containing fiber bundle according to any one of [57] to [71],
wherein a mass contained amount of the particles in the particle-containing fiber bundle is 20% to 80% by mass.

[73]: The particle-containing fiber bundle according to any one of [57] to [72],
wherein a mass contained amount of the organic binder in the particle-containing fiber bundle is 0.5% to 20% by mass.

[74]: The particle-containing fiber bundle according to any one of [57] to [73],
wherein a mass ratio (mass of particles/mass of organic binder) of the particles to the organic binder in the particle-containing fiber bundle is 2.5 to 100.

[75]: The particle-containing fiber bundle according to any one of [57] to [74],
wherein the fibers include recycled fibers.

[76]: The particle-containing fiber bundle according to any one of [57] to [75],
wherein the organic binder includes at least one resin selected from the group consisting of a polyamide resin, an epoxy resin, an unsaturated polyester resin, a vinyl ester resin, and a polyurethane resin.

[77]: The particle-containing fiber bundle according to any one of [57] to [76],
wherein a fiber cotton containing the fiber is used.

[78]: The particle-containing fiber bundle according to any one of [57] to [77],
wherein a particle diameter D10 at which an integrated value of the particles in a volume-based particle size distribution is 10% is 50 μm or less.

[79]: The particle-containing fiber bundle according to any one of [57] to [78],
wherein a particle diameter D90 at which an integrated value of the particles in a volume-based particle size distribution is 90% is 0.5 μm or more.

[80]: The particle-containing fiber bundle according to any one of [57] to [79],
wherein a particle diameter D10 at which an integrated value of the particles in a volume-based particle size distribution is 10% is 0.05 μm or more.

[81]: The particle-containing fiber bundle according to any one of [57] to [80],
wherein a ratio (D75/D25) of a particle diameter D75 at which an integrated value of the particles in a volume-based particle size distribution is 75% to a particle diameter D25 at which the integrated value is 25% is 1 to 15.

[82]: The particle-containing fiber bundle according to any one of [57] to [81],
wherein a ratio of an average fiber diameter of the fibers to the median diameter of the particles (average fiber diameter (μm)/median diameter (μm) of particles) is 0.01 to 0.4.

[83]: A particle-containing fiber bundle having a prolate spheroidal shape or a strand shape, comprising:

   a plurality of shortened fibers;
   polyether ether ketone resin particles; and
   an organic binder.

[84]: The particle-containing fiber bundle according to [83],
wherein the fibers include carbon fibers.

[85]: The particle-containing fiber bundle according to [83] or [84],
wherein a median diameter of the resin particles is 0.1 $\mu$m or more and 100 $\mu$m or less.
[86]: The particle-containing fiber bundle according to any one of [83] to [85],
wherein a ratio of a length of the particle-containing fiber bundle to an average fiber length of the fibers contained in the particle-containing fiber bundle (length of particle-containing fiber bundle/average fiber length of fibers contained in particle-containing fiber bundle) is 1.1 to 2.5.
[87]: The particle-containing fiber bundle according to any one of [83] to [86],
wherein an average fiber length of the fibers is 1 to 100 mm.
[88]: The particle-containing fiber bundle according to any one of [83] to [87],
wherein an average fiber length of the fibers is 12 to 50 mm.
[89]: The particle-containing fiber bundle according to any one of [83] to [87],
wherein an average fiber length of the fibers is 2 to 12 mm.
[90]: The particle-containing fiber bundle according to any one of [83] to [89],
wherein the organic binder includes at least one resin selected from the group consisting of a polyamide resin, an epoxy resin, and a polyurethane resin.

Effect of the Invention

According to one embodiment of the present invention, it is possible to provide a particle-containing fiber bundle having high uniformity and further improved feed efficiency, and a production method of the same. According to one embodiment of the present invention, it is possible to provide a particle-containing fiber bundle having high uniformity and further improved feed efficiency even when a recycled raw material is used as a carbon fiber as a raw material, and a production method of the same.

According to the preferred embodiment of the present invention, a particle-containing fiber bundle in which the feed efficiency is improved is obtained. In addition, a size of the particle-containing fiber bundle can be easily adjusted. A particle-containing fiber bundle in which the feed efficiency and resin-impregnation properties are improved can be easily obtained when a fiber cotton raw material is used.

Brief Description of the Drawings

FIG. 1A is a diagram showing an embodiment of an agitation granulator, and shows a horizontal cross-sectional view of an agitation tank.
FIG. 1B is a cross-sectional view taken along a line b-b of FIG. 1A.
FIG. 2 is an internal perspective view showing an embodiment of a rolling agitation granulator.
FIG. 3 is a photograph showing a form example of recycled fibers.
FIG. 4 is a photograph showing a morphological example of virgin fibers.
FIG. 5 is an image obtained by imaging a particle-containing fiber bundle obtained in Example 1.
FIG. 6 is an image showing appearance of the particle-containing fiber bundle obtained in Example 1.
FIG. 7 is an image showing a cross section of the particle-containing fiber bundle obtained in Example 1.

Mode for Carrying Out of the Invention

Hereinafter, the present invention will be described in detail.

[Particle-containing fiber bundle production method]

One embodiment of the present invention relates to a particle-containing fiber bundle production method. The particle-containing fiber bundle production method includes mixing a plurality of shortened fibers, particles having a median diameter of 100 $\mu$m or less, an organic binder, and a liquid to produce a particle-containing fiber bundle having a prolate spheroidal shape or a strand shape. Here, the fibers include carbon fibers, and the particles are used in an amount of 10 parts by mass or more with respect to 100 parts by mass of the fibers. The median diameter is a particle diameter (D50) at which an integrated value in a volume-based particle size distribution is 50%.

The method of using a plurality of shortened fibers as a starting raw material typically includes the following steps (i) to (iii).

(i) Mixing step

(ii) Bundling step

(iii) Drying step

The time of mixing the fibers, the particles, the organic binder, and the liquid is not limited, but from the viewpoint of production efficiency, it is preferable to include mixing the particles, the organic binder, and the liquid to obtain a mixture 1, and mixing the mixture 1 and the fibers to obtain a mixture 2. The mixture 1 can be produced in the (i) mixing step, but may be prepared separately. The mixture 2 can be produced in the (i) mixing step, but bundling may be advanced at the same time as the generation of the mixture 2 in the (ii) bundling step. An amount of the raw materials used can be, for example, 10 to 200 parts by mass of the particles, 1 to 200 parts by mass of the liquid, and 1 to 40 parts by mass of the organic binder with respect to 100 parts by mass of the fibers until the particle-containing fiber bundle is generated.

From the viewpoint of maintaining a shape of the fiber bundle, the amount of the organic binder used is preferably 1 part by mass or more, more preferably 3 parts by mass or more, and still more preferably 6 parts by mass or more with respect to 100 parts by mass of the fibers. From the viewpoint of maintaining the shape of the particle-containing fiber bundle, the amount of the organic binder used is preferably 40 parts by mass or less, more preferably 20 parts by mass or less, and still more preferably 10 parts by mass or less with respect to 100 parts by mass of the fibers. It is possible to combine the above upper limit and lower limit in any manner. It may be, for example, 1 to 40 parts by mass, 3 to 20 parts by mass, or 6 to 10 parts by mass.

From the viewpoint of reducing the total length of the particle-containing fiber bundle, the amount of the particles used is 10 parts by mass or more, preferably 20 parts by mass or more, more preferably 30 parts by mass or more, still more preferably 40 parts by mass or more, particularly preferably 50 parts by mass or more, and most preferably 55 parts by mass or more with respect to 100 parts by mass of the fibers. From the viewpoint of making the shape of the particle-containing fiber bundle uniform, the amount of the particles used is preferably 150 parts by mass or less, more preferably 100 parts by mass or less, still more preferably 90 parts by mass or less, particularly preferably 80 parts by mass or less, and most preferably 75 parts by mass or less with respect to 100 parts by mass of the fibers. It is possible to combine the above upper limit and lower limit in any manner. It may be, for example, 10 to 150 parts by mass, 20 to 150 parts by mass, 30 to 100 parts by mass, 40 to 90 parts by mass, 50 to 80 parts by mass, or 55 to 75 parts by mass.

From the viewpoint of uniformly dispersing the particles in the particle-containing fiber bundle, it is preferable to use the raw materials such that a mass ratio of the particles to the organic binder (mass of the particles/mass of the organic binder) is 2.5 to 100, and it is more preferable to use the raw materials such that the mass ratio of the particles to the organic binder is 5.0 to 50.

From the viewpoint of efficiently carrying out liquid crosslinking, the amount of the liquid used is preferably 5 parts by mass or more, more preferably 10 parts by mass or more, still more preferably 30 parts by mass or more, particularly preferably 60 parts by mass or more, and most preferably 80 parts by mass or more with respect to 100 parts by mass of the fibers. From the viewpoint of facilitating drying, the amount of the liquid used is preferably 200 parts by mass or less, more preferably 180 parts by mass or less, and still more preferably 160 parts by mass or less with respect to 100 parts by mass of the fibers. It is possible to combine the above upper limit and lower limit in any manner. It may be, for example, 5 to 200 parts by mass, 10 to 200 parts by mass, 30 to 180 parts by mass, 60 to 180 parts by mass, or 80 to 160 parts by mass.

Details of each step will be described below.

(i) Mixing step

In the mixing step, the fibers, the particles, the organic binder, and the liquid can be mixed to obtain a mixture. In the mixing step, a general defibrating device can be used, but the present invention is not limited thereto. In an example, the fibers and the particles can be put into an agitation granulator such as a Henschel mixer, and agitated and mixed in a dry state. The method has an advantage that the subsequent bundling step can be proceeded without taking out the generated mixture from the agitation granulator. The bundling step may be proceeded without performing the mixing step.

(ii) Bundling step

In the bundling step, the mixture obtained in the mixing step is mixed with the liquid to form a fiber bundle. The particles, the organic binder, and the liquid can be mixed in the present step to obtain a mixture. From the viewpoint of allowing the particles or the organic binder to be present inside the fiber bundle, it is preferable that the particles or the organic binder is mixed before the fiber bundle is generated, that is, before the mixing starts in the bundling step or during the mixing in the (i) mixing step.

The fibers and particles constituting the mixture are aggregated by a capillary force based on a surface tension of the liquid to form a fiber bundle containing the liquid. A mixed liquid obtained by mixing the liquid and the organic binder may be used in the bundling. Hereinafter, the liquid alone or the mixed liquid is referred to as a bundling liquid. The bundling liquid is not particularly limited, and for example, a solvent such as an organic solvent can be used, and the organic binder and other components may be contained. In the solvent, the organic binder and other components may be dissolved, mechanically dispersed, or dispersed by a surfactant. In addition, as the bundling liquid, a liquid of which the viscosity is reduced by heating can be used.

The amount of the bundling liquid is, for example, 70 to 210 parts by mass with respect to 100 parts by mass of the total amount of the fibers of the raw materials (hereinafter, may be referred to as "raw material fibers") used for producing the particle-containing fiber bundle, but is not limited thereto. The amount of the bundling liquid can be appropriately adjusted while observing the state of the mixture.

When the viscosity of the bundling liquid is 10 Pa·s or less at 23°C, it is possible to make the shape of the particle-containing fiber bundle uniform. The viscosity can be set to 8 Pa·s or less, 5 Pa·s or less, 2 Pa·s or less, or 0.5 Pa·s or less. On the other hand, the viscosity can be set to 0.0001 Pa·s or more. It is possible to combine the above upper limit and lower limit in any manner. It may be, for example, 0.0001 to 10 Pa·s, 0.0001 to 8 Pa·s, 0.0001 to 5 Pa·s, 0.0001 to 2 Pa·s, or 0.0001 to 0.5 Pa·s.

In the bundling by heating, a bundling liquid having a viscosity in the above-described range at this time can be used. The viscosity is a value measured using a B-type rotational viscometer (for example, LVDV-1 Pri manufactured by Brookfield) at a rotation speed of 50 rpm.

When a surface tension of the bundling liquid is 120 mN/m or less, liquid crosslinking can be formed between the fibers, and the fibers can be aligned by facilitating movement of the fibers. The surface tension can be set to 110 mN/m or less, 100 mN/m or less, 90 mN/m or less, 72 mN/m or less, 60 mN/m or less, 50 mN/m or less, or 40 mN/m or less at 23°C. On the other hand, the surface tension can be set to 10 mN/m or more, 15 mN/m or more, 20 mN/m or more, or 30 mN/m or more. It is possible to combine the above upper limit and lower limit in any manner. It may be, for example, 10 to 120 mN/m, 10 to 110 mN/m, 15 to 100 mN/m, 15 to 90 mN/m, 20 to 72 mN/m, 20 to 60 mN/m, 30 to 50 mN/m, or 30 to 40 mN/m.

The surface tension is a value measured by a plate method (vertical plate method). In the bundling by heating, a bundling liquid having a tension in the above-described range at this time can be used.

As a degree of maintenance of the length of the fibers, from the viewpoint of increasing the uniformity of the fiber bundle, a ratio (Y/X) of an average fiber length Y of the fibers in the particle-containing fiber bundle to an average fiber length X of the raw material fibers is preferably 0.55 or more, more preferably 0.70 or more, still more preferably 0.80 or more, and particularly preferably 0.90 or more. The ratio (Y/X) can be 1 or less. It is possible to combine the above upper limit and lower limit in any manner. It may be, for example, 0.55 to 1, 0.70 to 1, 0.80 to 1, or 0.90 to 1.

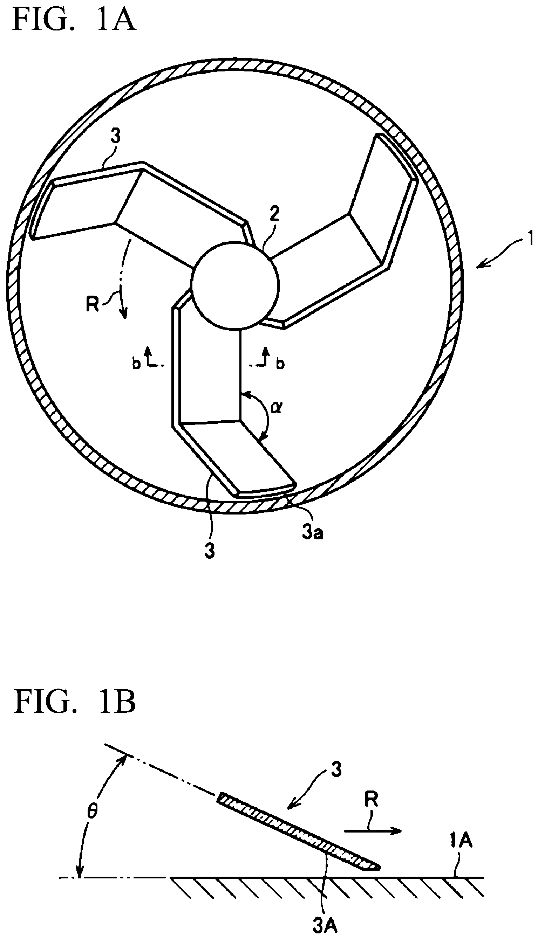

Hereinafter, the agitation granulator suitably used in the (i) mixing step or the (ii) bundling step will be described with reference to FIGS. 1A and 1B.

As shown in FIG. 1A, the agitation granulator preferably includes a rotating shaft 2 on a central axis inside an agitation tank 1 having a bottomed cylindrical shape, and a plurality of (three in FIG. 1A) propeller-shaped agitation blades extend radially from the rotating shaft 2 at equal intervals. The agitation blade may be a disk-shaped agitation blade perpendicular to the rotation axis. The rotating shaft may be a disk having undulations and protrusions.

As shown in FIG. 1B, an agitation blade 3 is provided to be inclined with respect to a bottom surface 1A of the agitation tank 1 in a rotation direction. An included angle (hereinafter, may be simply referred to as "inclination angle") θ between a surface 3A which is a rear surface with respect to a rotation direction R and the bottom surface 1A of the agitation tank 1 is preferably in a range of 1° to 60°. When the inclination angle θ of the agitation blade 3 is 1° or more, it is possible to agitate the mixture while circulating the mixture in the agitation tank. When the inclination angle θ of the agitation blade 3 is 60° or less, it is possible to adjust a rotation speed within a range in which resistance to the agitation blade is suppressed and a load is not applied to the device. The inclination angle θ is more preferably 10° to 50°, and still more preferably 20° to 40°.

In FIG. 1A, the agitation blade 3 is bent at an angle α in the middle of a longitudinal direction thereof. For example, a distance between the bottom surface of the agitation blade 3 and the bottom surface 1A of the agitation tank 1 may be set to 1 mm or less so that the raw materials stayed at the bottom are scraped up.

A distance between a tip of the agitation blade 3 and a side surface (wall surface) of the agitation tank 1 may be set to 10 mm or more so that a damage due to shearing of the raw materials is suppressed. The agitation blade is not limited to the bent blade as described above, and may be a linear plate-like blade. The agitation blade may be bent in an arc shape.

The agitation granulator may be provided with a propeller auxiliary agitation blade (chopper) for carrying out auxiliary agitation at the wall surface of the agitation tank. The agitation tank of the agitation granulator may include a scraper on the bottom surface or the side surface. As the agitation tank, an agitation tank having an agitation blade (agitator) which rotates in a horizontal direction and a propeller auxiliary agitation blade (chopper) which rotates in a vertical direction is used; and the agitation is carried out with the agitation blade which rotates in the horizontal direction and the propeller auxiliary agitation blade which rotates in the vertical direction, whereby efficient agitation and granulation can be carried out. The auxiliary agitation blade which rotates in the vertical direction has a role of crushing the excessively large granulated product and thus making the size of the particle-containing fiber bundle uniform.

As rotating conditions of the agitation blade in the agitation granulator, it is preferable that a circumferential speed of the tip (a portion 3a in FIG. 1a) of the agitation blade (hereinafter, simply referred to as "circumferential speed") is in a range of 1 to 20 m/sec. When the circumferential speed is 1 m/sec or more, it is possible to agitate the mixture while circulating the mixture in the agitation tank. When the circumferential speed is 20 m/sec or less, it is possible to make the particle shape of the particle-containing fiber bundle uniform. The circumferential speed of the agitation blade is more preferably 4 to 12 m/sec, and still more preferably 4 to 8 m/sec.

It is preferable that a circumferential speed of the chopper is in a range of 5 to 30 m/sec.

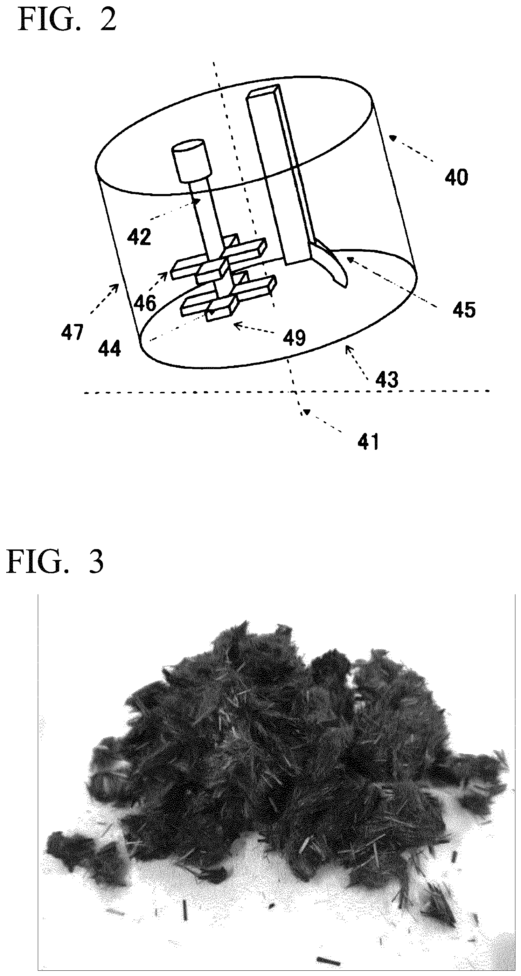

Another aspect of the agitation granulator suitably used in the particle-containing fiber bundle production method will be described with reference to FIG. 2.

In one aspect of a rolling agitation granulator, as shown in FIG. 2, a rotatable container 40 which houses the raw material fibers, the particles, the organic binder, and the liquid inside is provided, and a rotating shaft portion 42 parallel to a central axis 41 is disposed inside the container 40 and at a position eccentric from the central axis 41 of the container 40. It is preferable that the rotating shaft portion 42 is rotatable in a direction opposite to a rotation direction of the container 40. By rotating in the opposite direction, an impact force between the agitation blade and the raw material fibers is increased, and the fibers can be aligned in a short time by strong shearing. The rotation direction of the rotating shaft portion 42 may be the same direction as the container 40.

When the rotation direction of the agitation blade is opposite to the rotation direction of the container, the number of filaments included in the fiber bundle is small, and distribution of the number of filaments and the shape of the filaments included in the fiber bundle tends to be uniform. When the rotation direction of the agitation blade is the same as the rotation direction of the container, the number of filaments included in one fiber bundle tends to be large, and the fibers tend to be easily collected.

It is considered that the number of filaments is small and the liquid crosslinking between the fiber bundles having a uniform distribution proceeds by carrying out the agitation such that the rotation direction of the agitation blade is opposite to the rotation direction of the container, and then carrying out the agitation such that the rotation direction of the agitation blade is the same as the rotation direction of the container. In this manner, it is possible to obtain a fiber bundle which is uniform and has a high bulk density.

The rotating shaft portion 42 extends to the vicinity of a bottom plate 43 of the container 40, and has an agitation blade 44 which moves in a region where the mixture can be present. It is possible to circulate the mixture by the rotation of the container 40 and apply shear to the mixture by the rotation of the agitation blade 44 to align the fibers. The aspect described in the agitation granulator can be adopted to the blade of the agitation blade 44. For example, a distance between a bottom surface 49 of the agitation blade 44 and the bottom plate 43 of the agitation tank may be set to 10 mm or more so that the agitation blade is efficiently brought into contact with the raw materials scraped up by the scraper. A distance between a tip 46 of the agitation blade 44 and a side surface 47 of the agitation tank may be set to 10 mm or more so that a damage due to shearing of the raw materials is suppressed.

A scraper 45 is provided on the side surface of the container 40. The scraper may be provided on the side surface 47, the bottom plate 43, or both of the side surface 47 and the bottom plate 43 inside the container 40. The scraper 45 can scrape off the adhering raw materials.

Regarding rotation conditions, a circumferential speed of the container 40 (container circumferential speed) can be set in a range of 0.4 to 1.2 m/sec. When the circumferential speed is 0.4 m/sec or more, it is possible to agitate the mixture while circulating the mixture in the agitation tank. On the other hand, when the circumferential speed is 1.2 m/sec or less, the mixture can be efficiently brought into contact with the agitation blade or the scraper, and thus the treatment time can be shortened. The circumferential speed can be set to 0.5 to 1.0 m/sec, or 0.7 to 0.9 m/sec.

The circumferential speed of the tip of the agitation blade 44 (tip circumferential speed) can be set in a range of 1 to 30 m/sec. When the tip circumferential speed is 1 m/sec or more, it is possible to align the fibers in a short time and increase the density of the fiber bundle. On the other hand, when the tip circumferential speed is 30 m/sec or less, it is possible to make the shape of the fiber bundle uniform. The circumferential speed of the agitation blade 44 can be set to 10 to 20 m/sec, or 1 to 8 m/sec.

An agitating time with the agitation granulator is not particularly limited, and the agitation may be carried out for a time at which a desired fiber bundle is obtained. The time taken for the bundling step can be shortened by passing through the fiber cotton.

A temperature during the agitation is not particularly limited, and the agitation can be carried out at room temperature (for example, 5°C to 40°C). A temperature increase of the container or the mixture due to the influence of agitation is allowed. **In** the bundling, the organic binder can be agitated at a temperature equal to or higher than a melting point or a softening point of the organic binder so that the organic binder is solid in a stage of maintaining a state of being granulated as a product, and then cooled at a point at which the particle-containing fiber bundle is generated.

It is preferable that the agitation conditions are adjusted such that a fiber bundle in a state of being aligned is obtained, instead of a spherical carbon fiber ball in which the fiber is crimped. In order to obtain the fiber bundle in a state of being aligned, for example, a method of increasing the amount of the liquid, a method of increasing the circumferential speed of the tip of the agitation blade, and a method of using raw material fibers having an average fiber length of more than 1 mm can be used.

The timing of completion of the granulation is not particularly limited, but is preferably a timing at which a state in which the fiber bundle is formed to the extent that the particle size distribution can be specified can be confirmed.

(iii) Drying step

In the drying step, the liquid contained in the bundling liquid of the particle-containing fiber bundle is removed by drying the particle-containing fiber bundle formed in the bundling step. Even when the liquid evaporates due to drying, the shape of the particle-containing fiber bundle can be maintained due to adhesion of the organic binder. The drying may be forced drying or natural drying.

In one example, the particle-containing fiber bundle formed in the agitation tank of the agitation granulator can be dried while being agitated in the agitation tank, without being taken out of the agitation tank.

In another example, the particle-containing fiber bundle formed in the agitation tank of the agitation granulator may be taken out from the agitation tank and dried at another place. The other place may be, for example, a hot air dryer, or may be in a transport pipe or on a transport belt.

When a dryer is used, the drying can be carried out at 50°C to 150°C for approximately 1 to 5 hours.

Examples of a drying equipment include a box type dryer, a belt conveyor dryer, a tunnel dryer, a fixed tank agitated dryer, a drum rotary dryer, a rotary kiln, a fluidized bed dryer, an agitated hot air dryer, an air flow dryer, an infrared dryer, a microwave dryer, and a vacuum dryer.

As other steps, a classification step or a chopping step may be performed.

The classification step can be introduced in any of the steps (i) to (iii), but introduction after (iii) can enhance uniformity of the plurality of particle-containing fiber bundles.

A sieve used for the classification can be configured to include, for example, a vibration mechanism, a container coupled to the vibration mechanism, and a sieve mesh which partitions an internal space of the container. A mesh shape or a mesh size of the sieve is adjusted so that the particle-containing fiber bundle can be sieved and sorted into a desired size.

When the particle-containing fiber bundle has a prolate spheroidal shape, the mesh shape is preferably a rectangular shape or a rhombic shape. The mesh shape may be a square shape or a circular shape.

The chopping step is preferably performed before (i), and for example, a continuous fiber bundle containing virgin fibers is cut at a predetermined interval in a fiber direction using a rotary cutter to obtain a chopped fiber bundle.

A bundle size of the continuous fiber bundle (the number of fiber filaments constituting the bundle) can be set to, for example, 10K or more and 100K or less. Here, "K" is a symbol representing 1,000, and for example, 1K means 1,000 and 10K means 10,000. From the viewpoint of production efficiency, a bundle size of the continuous fiber bundle is preferably 24K or more, more preferably 36K or more, and still more preferably 48K or more. It may be, for example, 24K or more and 100K or less, 36K or more and 100K or less, or 48K or more and 100K or less.

A fiber length of the chopped fiber bundle is not limited, but is, for example, 3 mm or more, and may be 5 mm or more or 10 mm or more; and is, for example, 60 mm or less, and may be 50 mm or less, 40 mm or less, 30 mm or less, or 20 mm or less. It is possible to combine the above upper limit and lower limit in any manner. It may be, for example, 3 to 60 mm, 3 to 50 mm, 5 to 40 mm, 5 to 30 mm, or 10 to 20 mm.

When the chopped fiber bundle contains water, a sizing agent, or the like, it is preferable to remove the water, the sizing agent, or the like by a solvent or thermal decomposition to obtain dried fiber cotton.

<Fiber>

As the raw material fibers, it is preferable to use a plurality of shortened fibers or to use a fiber cotton containing a plurality of shortened fibers. By using the fiber cotton, the fiber can be bundled from a state of being separated into monofilaments, and thus it is easy to efficiently obtain a uniform particle-containing fiber bundle.

The fibers include carbon fibers. The carbon fiber is useful for produced a fiber-reinforced resin composition, and can provide a fiber-reinforced resin composition having a high specific strength and a high specific elastic modulus. The carbon fiber includes a PAN-based carbon fiber and a pitch-based carbon fiber, and a PAN-based carbon fiber is easily available. From the viewpoint of specific strength and specific elastic modulus, a proportion of the carbon fiber in the raw material fibers is preferably 70% by mass or more, and more preferably 90% to 100% by mass.

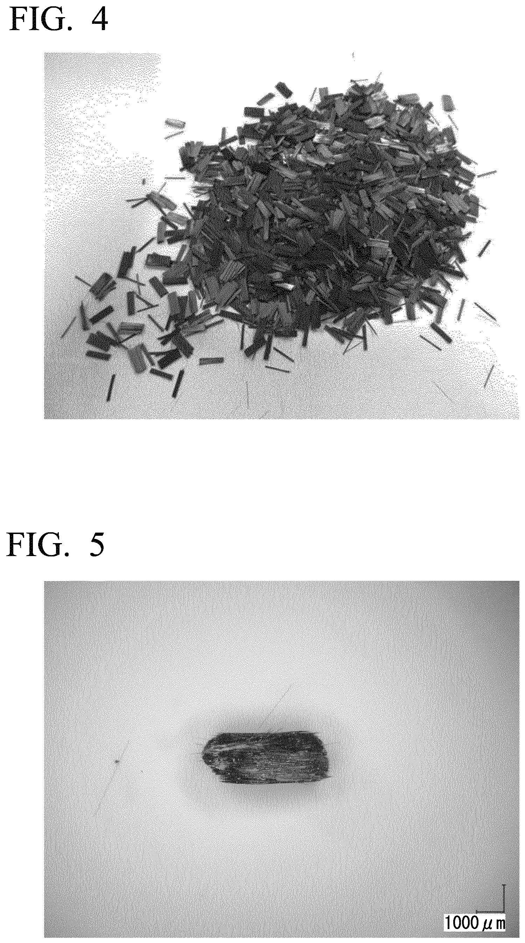

The raw material fibers are not limited to virgin fibers, and may be recycled fibers. FIG. 3 is an example of a form of the recycled fibers. The recycled fiber is in the form of fiber cotton in which monofilaments are randomly overlapped. FIG. 4 is an example of a form of the virgin fibers. The virgin fiber is a mass of fiber bundles in which the fibers are aligned.

A sizing agent or a matrix resin of FRP may be attached to the raw material fibers. An amount of resin residues in the raw material fibers such as the carbon fibers is, for example, in a range of 0.01 % to 10%.

By performing the particle-containing fiber bundle production method described above, even when the raw material fibers include the recycled fibers, it is possible to produce a particle-containing fiber bundle in which the fibers are aligned without being cut, the length is maintained, and the size is controlled. Examples of the recycled fiber include a fiber obtained by decomposing a matrix with heat, a subcritical fluid, or a supercritical fluid, and a fiber obtained by cutting a waste material of a fiber base material. The matrix can be completely removed until the recycled fiber becomes cotton-like. When there is a resin residue which cannot be completely removed, the resin residue may be removed by a heat treatment in an oxidative atmosphere.

The fibers contained in the particle-containing fiber bundle may be fibers in which a part or all of the fibers have been thermally deteriorated. As an example of the thermally deteriorated carbon fiber, the recycled carbon fiber is recovered from the waste material of the CFRP, and is thermally deteriorated in a process of removing the matrix resin by pyrolysis.

The raw material fibers are a collection of a plurality of shortened fibers (discontinuous fibers), and are preferably in a cotton-like state. Since the fibers are in a cotton-like state, the fibers are separated into monofilaments in a dry state, so that energy for resolving the alignment is not required when the fibers are wet and aligned to a certain degree, and thus the size of the particle-containing fiber bundle can be efficiently controlled.

The raw material fibers may include a group of fibers which are aligned together, but for example, it is preferable that 50% by mass or more of the raw material fiber is fiber cotton.

The shortened fibers may be obtained by cutting a bundle of continuous fibers, or fibers having a discontinuous form may be used.

The continuous fibers may be tows or fibers taken out from a prepreg, a molded body, or the like. For example, the recycled fibers obtained by decomposing the matrix with heat are in a dry cotton-like fiber state immediately after heating. By using the agitation granulator, it is possible to obtain, from the fiber recycling process, a particle-containing fiber bundle in which fibers are aligned without changing the form of the fibers.

The raw material fibers may be defibrated before agitation with the agitation granulator or the like. For example, before a fiber treatment agent is put into the agitation tank, the raw material fibers are defibrated by agitating the fiber containing no liquid in the agitation tank with the agitation blade. By defibrating the fibers bonded by adherent materials such as resin carbides into smaller units of fibers by the action of the rotation of the agitation blade, the fibers can be easily aligned by the agitation with the agitation blade after adding the fiber treatment agent. At the same time, the uniformity of the fiber bundle can be improved.

A fiber diameter of the raw material fibers is not particularly limited, but is, for example, in a range of 3 $\mu$m to 100 $\mu$m, and 5 $\mu$m to 15 $\mu$m is easily available.

A bulk density of the raw material fibers is, for example, in a range of 0.01 to 0.90 g/cm$^3$. When the bulk density of the raw material fibers is 0.01 to 0.10 g/cm$^3$, it is easy to convert the raw material fibers into a fiber bundle having a bulk density higher than that of the raw material fibers. Examples of the raw material fibers with a bulk density of 0.01 to 0.10 g/cm$^3$ include a fiber cotton.

From the viewpoint of uniformly bundling, the fiber length of the raw material fibers is preferably 100 mm or less, more preferably 60 mm or less, and still more preferably 50 mm or less, and may be 20 mm or less or 12 mm or less.

From the viewpoint of strength when used for a molded body, a fiber length of the particle-containing fiber bundle is preferably 1 mm or more, and more preferably 2 mm or more.

The particle-containing fiber bundle may not contain a fiber having a fiber length of less than 1 mm, or may contain the fiber at a contained amount of less than 5 wt%.

When used for a fiber-reinforced resin composition (pellet) used for extrusion molding, an average fiber length of the raw material fibers is preferably 2 to 12 mm.

When used for a fiber-reinforced resin material (prepreg) used for press molding, the average fiber length of the raw material fibers is preferably 12 to 50 mm; and from the viewpoint of easily uniformly depositing the particle-containing fiber bundle by spraying during the production of the prepreg, the average fiber length of the raw material fibers is more preferably 12 to 30 mm.

When the fiber length of the raw material fibers is equal to or more than the above-described lower limit, the strength of the fiber-reinforced resin composition can be sufficiently increased, and the fiber alignment can be highly controlled. When the average fiber length of the raw material fibers is equal to or less than the above-described upper limit, it is possible to suppress entanglement in the device when producing the particle-containing fiber bundle, and it is possible to improve the production efficiency and to uniformly control the shape of the particle-containing fiber bundle.

A weighted average fiber length is adopted as the average fiber length. The average fiber length can be measured by a method described in the section of Examples later. An image captured by microscopic observation can be subjected to a binarization treatment using image processing software such as ImageJ to calculate the average fiber length.

When the particle-containing fiber bundle is only composed of fibers having the same fiber length, it is possible to suppress variation in quality of the particle-containing fiber bundle between production lots. A difference between the maximum value and the minimum value of the fiber length among the plurality of shorted fibers constituting the particle-containing fiber bundle is preferably 5 mm or less, more preferably 4 mm or less, and still more preferably 3 mm or less.

EP 4 635 700 A1

<Particles>

By using the particles having a median diameter of 100 μm or less, it is possible to adjust the total length of the particle-containing fiber bundle to be short while uniformly forming the shape of the particle-containing fiber bundle. As the total length of the particle-containing fiber bundle is shorter, fiber interference at the tip portions of the particle-containing fiber bundles is reduced, and thus the feed efficiency from the hopper to the feeder is easily improved. When the particles are present in the particle-containing fiber bundle, it is possible to form a space between the fibers and to easily impregnate the resin.

In the present specification, the particles have a solubility in water of 0.0001 g/mL or less at 23°C, and are a material used separately from the organic binder described in <Organic binder> later.

In addition, it is preferable that the particles can maintain the shape of the particles in a state in which a liquid component described in <Liquid> later is present and in a state in which the liquid component is not present.

From the viewpoint of adjusting the total length of the particle-containing fiber bundle to be short, it is preferable that the particles are difficult to dissolve in the liquid described later, and for example, the solubility in the liquid at 23°C is set to 0.01 g/100 g or less so that the particles are incorporated into the fiber bundle while maintaining the shape of the particles during the mixing.

The median diameter of the particles is a particle diameter (D50) at which the integrated value in the volume-based particle size distribution is 50%, and is preferably 0.1 μm or more, more preferably 3 μm or more, and still more preferably 10 μm or more. In this manner, the total length of the particle-containing fiber bundle can be adjusted to be short. In addition, in injection molding or press molding of the obtained particle-containing fiber bundle, the fibers are easily defibrated and uniformly dispersed, and thus the appearance of the molded product is improved. The median diameter of the particles is preferably 90 μm or less, more preferably 80 μm or less, and still more preferably 60 μm or less. In this manner, the shape of the particle-containing fiber bundle can be made uniform. In addition, in injection molding or press molding of the obtained particle-containing fiber bundle, an interface between the fiber bundles is uniform, and thus the strength of the molded product is improved.

It is possible to combine the above upper limit and lower limit in any manner. It may be, for example, 0.1 to 90 μm, 3 to 80 μm, or 10 to 60 μm.

A particle diameter D90 at which the integrated value of the particles in the volume-based particle size distribution is 90% preferably 350 μm or less, more preferably 250 μm or less, and still more preferably 100 μm or less. As a result, the distribution of the particles and the fibers in the particle-containing fiber bundle is uniform. In addition, in a case of injection molding or press molding of the obtained particle-containing fiber bundle, the fibers are easily defibrated and uniformly dispersed, and thus the appearance of the molded product is improved. The particle diameter D90 is preferably 0.5 μm or more, and more preferably 30 μm or more. The total length of the particle-containing fiber bundle can be adjusted to be short. In addition, in a case of injection molding or press molding of the obtained particle-containing fiber bundle, the fibers are easily defibrated and uniformly dispersed, and thus the appearance of the molded product is improved.

It is possible to combine the above upper limit and lower limit in any manner. It may be, for example, 0.5 to 350 μm, 0.5 to 250 μm, or 30 to 100 μm.

A particle diameter D10 at which the integrated value of the particles in the volume-based particle size distribution is 10% preferably 70 μm or less, more preferably 50 μm or less, and still more preferably 30 μm or less. As a result, the distribution of the particles and the fibers in the particle-containing fiber bundle can be made uniform. In addition, in injection molding or press molding of the obtained particle-containing fiber bundle, an interface between the fiber bundles is uniform, and thus the strength of the molded product is improved. The particle diameter D10 is preferably 0.05 μm or more, and more preferably 1 μm or more. In this manner, the total length of the particle-containing fiber bundle can be adjusted to be short. In addition, in injection molding or press molding of the obtained particle-containing fiber bundle, the fibers are easily defibrated and uniformly dispersed, and thus the appearance of the molded product is improved.

It is possible to combine the above upper limit and lower limit in any manner. It may be, for example, 0.05 to 70 μm, 0.05 to 50 μm, or 1 to 30 μm.

A ratio (D75/D25) of a particle diameter D75 at which the integrated value of the particles in the volume-based particle size distribution is 75% to a particle diameter D25 at which the integrated value of the particles in the volume-based particle size distribution is 25% is preferably 1 to 15 and more preferably 1 to 10. As a result, the distribution of the particles and the fibers in the particle-containing fiber bundle can be made uniform. In addition, in injection molding or press molding of the obtained particle-containing fiber bundle, an interface between the fiber bundles is uniform, and thus the strength of the molded product is improved.

A relational expression (D84 - D16)/2 of a particle diameter D84 at which the integrated value of the particles in the volume-based particle size distribution is 84% and a particle diameter D16 at which the integrated value of the particles in the volume-based particle size distribution is 16% can be 1 to 150 or 5 to 100.

The volume-based particle size distribution for the particles is obtained by a laser diffraction/scattering method or image analysis. The measurement of the particle size distribution by a laser diffraction/scattering method can be performed, for example, by a method described in Examples. In addition, the measurement of the particle size distribution by image analysis can be performed, for example, by obtaining particle diameters of 50 or more particles from an image obtained using an optical microscope.

When a commercially available product is used as the particles, the median diameter, D90, D10, D75, D25, D84, and D16 of the catalog values may be used.

Two or more particles having different particle diameters, that is, particles having two or more peaks having different particle diameters in the particle size distribution measured by the above-described method can also be used. When particles having a peak at a particle diameter of 1,000 $\mu$m or more are used, the median diameter, D90, D10, D75, D25, D84, and D16 are obtained from a particle size distribution in which a peak at a particle diameter of 1,000 $\mu$m or more is separated by peak separation.

A ratio of the average fiber length of the raw material fibers to the median diameter of the particles (average fiber length ($\mu$m) of raw material fibers/median diameter ($\mu$m) of particles) is preferably 10 to 150 and more preferably 30 to 130. In this manner, the total length of the particle-containing fiber bundle can be adjusted to be short. In addition, in injection molding or press molding of the obtained particle-containing fiber bundle, the fibers are easily defibrated and uniformly dispersed, and thus the appearance of the molded product is improved. A ratio of the average fiber diameter of the raw material fibers to the median diameter of the particles (average fiber diameter ($\mu$m) of raw material fibers/median diameter ($\mu$m) of particles) is preferably 0.01 to 0.4 and more preferably 0.07 to 0.3. As a result, the distribution of the particles and the fibers in the particle-containing fiber bundle can be made uniform. In addition, in injection molding or press molding of the obtained particle-containing fiber bundle, an interface between the fiber bundles is uniform, and thus the strength of the molded product is improved.

Examples of the shape of the particles include a spherical shape, a flat shape, a needle shape, and an amorphous shape. However, since it is easy to shorten the total length of the particle-containing fiber bundle when the shape is different from the fiber, a spherical shape is preferable. In addition, by forming the fiber into a sphere, in injection molding or press molding, the fibers are easily defibrated and uniformly dispersed, and thus the appearance of the molded product is improved. An aspect ratio of the particles can be set to 1 to 1.5.

The maximum Feret diameter of the particles can be set to 0.1 $\mu$m to 100 $\mu$m, and may be set to 3 to 80 $\mu$m. As the maximum Feret diameter, a median value of the maximum distance between parallel tangents in contact with the opposing contour lines can be used, the maximum distance being obtained by analyzing 50 or more particles from an image obtained using a transmission electron microscope (TEM).

Examples of the type of the particles include organic particles and inorganic particles. Examples of the organic particles include thermoplastic resin particles, thermosetting resin particles, and curing agent particles. The curing agent particles are capable of curing a thermosetting resin. The thermoplastic resin particles and the thermosetting resin particles can be components constituting a matrix resin of the fiber-reinforced resin composition or a molded body thereof. The organic particles and the inorganic particles may be used in combination.

Examples of a resin constituting the thermoplastic resin particles include a polyamide resin, a polyolefin resin, a polyester resin, a polycarbonate resin, a polyether sulfone resin, a polyether ether ketone resin, a polyether imide resin, and a polyphenylene sulfide resin.

When used as a matrix resin of the fiber-reinforced resin composition, a polyamide resin, a polyether ether ketone resin, a polyether imide resin, or a polyphenylene sulfide resin is preferable from the viewpoint of impact resistance of the molded body.

In particular, when polyether ether ketone resin particles are used, for example, even with a polyether ether ketone resin having a high viscosity which is difficult to impregnate, it is possible to impregnate the resin into the fibers, and thus mechanical properties of the molded product are improved.

An amount of the thermoplastic resin particles used is, for example, 1 to 200 parts by mass with respect to 100 parts by mass of the total amount of the raw material fibers; but when the obtained particle-containing fiber bundle is used as it is as a molding material, the amount thereof is preferably 30 to 300 parts by mass, and when the particle-containing fiber bundle is converted into another molding material, the amount thereof is preferably 1 to 100 parts by mass.

Examples of a resin constituting the thermosetting resin particles include an epoxy resin, a vinyl ester resin, an unsaturated polyester resin, a cyanate ester resin, a polyimide resin, a maleimide resin, a silicone resin, a melamine resin, a urea resin, an alkyd resin, a urethane resin, and a phenol resin.

When used as a matrix resin of the fiber-reinforced resin composition, an epoxy resin, a vinyl ester resin, a cyanate ester resin, or a phenol resin is preferable from the viewpoint of strength of the cured product.

An amount of the thermosetting resin particles used is, for example, 1 to 200 parts by mass with respect to 100 parts by mass of the total amount of the raw material fibers; but when the obtained particle-containing fiber bundle is used as it is as a molding material, the amount thereof is preferably 30 to 300 parts by mass, and when the particle-containing fiber bundle is converted into another molding material, the amount thereof is preferably 1 to 100 parts by mass.

Examples of the curing agent particles include dicyandiamides, phenols, amines, carboxylic acid anhydrides, thiols, imidazoles, phosphines, peroxides, and organometallic salts.

An amount of the curing agent particles used is, for example, 1 to 100 parts by mass with respect to 100 parts by mass of the total amount of the raw material fibers, but from the viewpoint of reducing the amount of the curing agent particles remaining so as not to be a destruction starting point of the molded body, the amount thereof is preferably 2 to 10 parts by mass.

Examples of the inorganic particles include metal particles, metal oxide particles, silica particles, silicate particles, carbonate particles, sulfate particles, hydroxide particles, glass particles, ceramic particles, graphite, and carbon black.

An amount of the inorganic particles used is, for example, 1 to 200 parts by mass with respect to 100 parts by mass of the total amount of the raw material fibers, but from the viewpoint of reducing the amount of the curing agent particles remaining so as not to be a destruction starting point of the molded body, the amount thereof is preferably 2 to 150 parts by mass.

One kind of these particles may be used alone, or two or more kinds thereof may be used in combination.

<Organic binder>

The organic binder is not particularly limited as long as it is an organic substance which can bind the fibers to each other. A suitable example of a material of the organic binder is a resin used for sizing with a commercially available general fiber bundle. In other words, the organic binder may be a component resin of the sizing agent. Examples of such a resin include a polyamide resin, an epoxy resin, an unsaturated polyester resin, a vinyl ester resin, and a polyurethane resin, but the present invention is not limited thereto. One kind of these resins may be used alone, or two or more kinds thereof may be used in combination.

The organic binder may include the same resin as the resin constituting the particles, but is used separately from the particles in order to bond the fibers to each other.

A solubility of the organic binder in water at 23°C is generally more than 0.0001 g/mL. In addition, a solubility of the organic binder in the liquid at 23°C is generally more than 0.01 g/mL.

A surfactant may be blended in the organic binder, in addition to the above-described resin. Examples of the surfactant include anionic surfactants such as an alkyl ether carboxylate; cationic surfactants such as an aliphatic quaternary ammonium salt and an imidazolinium salt; amphoteric surfactants such as a carboxylic betaine type surfactant; and nonionic surfactants such as a polyoxyethylene alkyl ether, a polyoxyethylene glycerin fatty acid ester, and a polyethylene glycol fatty acid ester.

<Liquid>

By using the liquid, the liquid crosslinking between the fibers can be formed, and thus the fibers can be bundled. From the viewpoint that the liquid crosslinking between the fibers can be formed at room temperature, it is preferable that the liquid is liquid at room temperature (25°C).

Examples of the liquid include organic solvents, for example, alcohols such as methanol, ethanol, and propanol, ketones such as acetone and methyl ethyl ketone, and hydrocarbons such as hexane, cyclohexane, benzene, toluene, and styrene, and water. From the viewpoint that explosion-proof equipment is not required in the production process, water is preferable.

[Particle-containing fiber bundle]

Another embodiment of the present invention relates to a particle-containing fiber bundle.

The particle-containing fiber bundle according to one embodiment of the present invention contains a plurality of shortened fibers, particles having a median diameter of 100 $\mu$m or less, and an organic binder, and has a prolate spheroidal shape or a strand shape. Here, the fibers include carbon fibers, and the particles are contained in an amount of 10 parts by mass or more with respect to 100 parts by mass of the fibers.

The particle-containing fiber bundle according to another embodiment of the present invention contains a plurality of shortened fibers, polyether ether ketone resin particles, and an organic binder, and has a prolate spheroidal shape or a strand shape.

It is preferable that the fibers in the particle-containing fiber bundle are aligned to form a fiber bundle. In addition, it is preferable that the fibers present on the surface of the fiber bundle are aligned by being curved along a contour of the prolate spheroidal shape.

The particle-containing fiber bundle can be produced, for example, by the above-described particle-containing fiber bundle production method. According to the above-described particle-containing fiber bundle production method, a fiber bundle is formed by aggregation of the plurality of fibers, and thus the positions of the tips of the fibers constituting the particle-containing fiber bundle are irregular.

When used as a raw material for injection molding or pellets, the shape of the particle-containing fiber bundle is preferably a prolate spheroidal shape from the viewpoint of feed efficiency to a kneader.

When being used for SMC, the shape of the fiber bundle is preferably a strand shape from the viewpoint of strength when formed into a molded body. As the fiber length of the fibers contained in the particle-containing fiber bundle is longer, the strand shape is more likely to be formed.

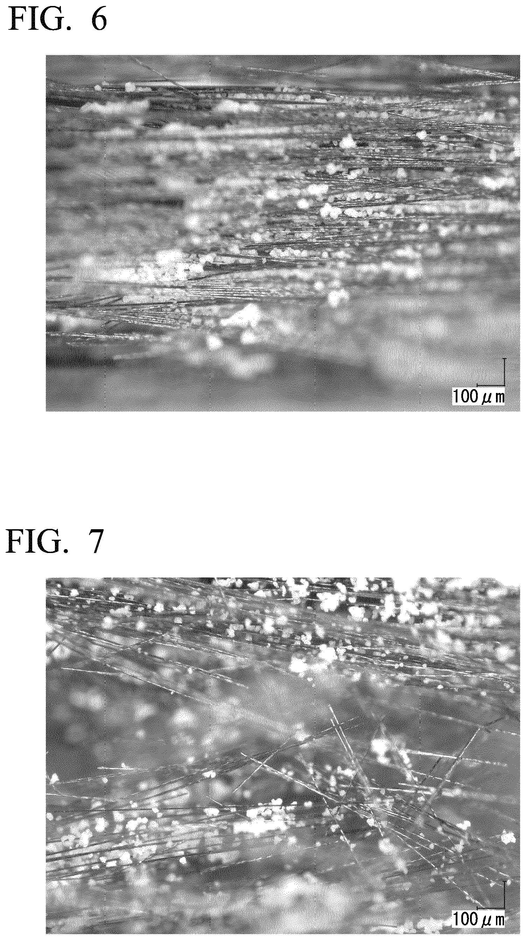

FIGS. 5 to 7 show appearance and cross section of the particle-containing fiber bundle obtained in Examples described in detail later. In an example, the particle-containing fiber bundle has a prolate spheroidal shape in which the fibers are aligned as shown in FIG. 5, and the particles and the fibers are uniformly present on a surface (appearance) and inside (cross section) of the particle-containing fiber bundle as shown in FIGS. 6 and 7.

A length of the particle-containing fiber bundle may be 3 mm or more, 6 mm or more, 12 mm or more, 20 mm or more, 50 mm or more, or 70 mm or more. The length of the particle-containing fiber bundle may be 100 mm or less, 70 mm or less, 50 mm or less, 40 mm or less, 25 mm or less, 12 mm or less, or 6 mm or less. It is possible to combine the above upper limit and lower limit in any manner. It may be, for example, 3 to 100 mm, 6 to 70 mm, 12 to 50 mm, 20 to 40 mm, 50 to 100 mm, 70 to 100 mm, 3 to 25 mm, 3 to 12 mm, or 3 to 6 mm.

The length of the particle-containing fiber bundle can be obtained by a method described in Examples.

When the particle-containing fiber bundle is used for injection molding or as a raw material for pellets, the length of the particle-containing fiber bundle is preferably 3 mm to 12 mm.

When the particle-containing fiber bundle is used as a raw material for press molding or SMC, the length of the particle-containing fiber bundle is preferably 12 mm or more and 50 mm or less.

A diameter of the thickest portion in the particle-containing fiber bundle may be 0.1 mm to 10 mm, and a cross-sectional shape thereof may be, for example, circular or elliptical.

From the viewpoint of strength when formed into a molded body, it is preferable that the length of the particle-containing fiber bundle is longer than an average fiber length of the fibers in the particle-containing fiber bundle.

From the viewpoint of feed efficiency, a ratio of the length of the particle-containing fiber bundle to the average fiber length of the fibers contained in the particle-containing fiber bundle (length of particle-containing fiber bundle/average fiber length of fibers contained in particle-containing fiber bundle) is preferably 1.1 to 5.0. In particular, when the feeder is a screw feeder including a hopper, the ratio is more preferably 1.1 to 2.5 because a constant amount can be easily stably supplied without being clogged at a supply port.

When the particle-containing fiber bundle has a prolate spheroidal shape, the diameter of the thickest portion is preferably 2 mm to 7 mm.

In addition, the length of the major axis of the particle-containing fiber bundle is longer than the average fiber length of the fibers contained in the fiber bundle, and is preferably 3 mm to 18 mm. The ratio thereof (length of the major axis of the particle-containing fiber bundle/average fiber length of the fibers contained in the fiber bundle) is preferably 1.1 to 5.0.

When being used for SMC, the shape of the particle-containing fiber bundle as the strand shape is preferably such that the diameter of the thickest portion is 2 mm to 10 mm.

In addition, the length of the major axis of the particle-containing fiber bundle is longer than the average fiber length of the fibers contained in the particle-containing fiber bundle, and is preferably 12 mm to 150 mm. The ratio thereof (length of the major axis of the particle-containing fiber bundle/average fiber length of the fibers contained in the particle-containing fiber bundle) is preferably 1.1 to 3.0.

The fibers contained in the particle-containing fiber bundle function as a reinforcing material for the molded body.

The number of filaments contained in the particle-containing fiber bundle can be, for example, 8,000 or more and 800,000 or less.

The number of filaments in a central portion of the major axis of the particle-containing fiber bundle is larger than the number of filaments in an end part of the major axis, whereby the particle-containing fiber bundle can be formed in a prolate spheroidal shape.

From the viewpoint of fluidity during molding, a fiber length of all fibers contained in the particle-containing fiber bundle is preferably 60 mm or less, more preferably 40 mm or less, and still more preferably 30 mm or less, and may be 20 mm or less or 12 mm or less. From the viewpoint of strength when used for a molded body, a fiber length of the particle-containing fiber bundle is preferably 1 mm or more, and more preferably 2 mm or more. The particle-containing fiber bundle may not contain a fiber having a fiber length of less than 1 mm, or may contain the fiber at a contained amount of less than 5 wt%.

It is possible to combine the above upper limit and lower limit in any manner. It may be, for example, 1 to 60 mm, 1 to 40 mm, 1 to 30 mm, 2 to 20 mm, or 2 to 12 mm.

From the viewpoint of uniformly bundling, an average fiber length is preferably 1 to 80 mm and more preferably 2 to 50 mm.

When used for a fiber-reinforced resin composition (pellet) used for extrusion molding, the average fiber length of the fibers is preferably 2 to 12 mm.

When used for a fiber-reinforced resin composition (prepreg) used for press molding, the average fiber length of the fibers is preferably 12 to 50 mm.

A weighted average fiber length is adopted as the average fiber length. An image captured by microscopic observation can be subjected to a binarization treatment using image processing software such as ImageJ to calculate the fiber length.

When the particle-containing fiber bundle is only composed of fibers having the same fiber length, it is possible to suppress variation in quality of the particle-containing fiber bundle between production lots.

A difference between the maximum value and the minimum value of the fiber length among the plurality of fibers constituting the particle-containing fiber bundle is preferably 5 mm or less, more preferably 4 mm or less, and still more preferably 3 mm or less.

A bulk density of the particle-containing fiber bundle can be set to, for example, 0.03 to 0.7 g/cm$^3$. Although it differs depending on the raw material fibers used, from the viewpoint of transportation efficiency of the particle-containing fiber bundle, the bulk density is preferably 0.1 g/cm$^3$ or more, and particularly preferably 0.2 g/cm$^3$ or more. In an application of a molded body having a low fiber contained amount, the bulk density may be 0.1 g/cm$^3$ or more and less than 0.3 g/cm$^3$. In an application of a molded body in which strength is required, the bulk density may be 0.3 g/cm$^3$ to 0.6 g/cm$^3$. Since an amount which can be fed at one time can be increased, in any case, the bulk density is preferably 0.15 g/cm$^3$ or more, and particularly preferably 0.2 g/cm$^3$ or more.

The bulk density of the particle-containing fiber bundle is measured in accordance with JIS Z 2512 and JIS R 1628.

An angle of repose of the particle-containing fiber bundle is preferably 60° or less, and more preferably 50° or less. The angle of repose of the particle-containing fiber bundle can be 10° or more. It may be, for example, 10° to 60° or 10° to 50°.

The angle of repose of the particle-containing fiber bundle can be determined by dropping 200 g of the fiber bundle from a position of a height of 100 mm onto a horizontally held disk having a diameter of 95 mm, measuring a deposition height of the fiber bundle after 10 seconds, and determining the angle θ of repose as θ = tan-1(T/R), where R is a radius of the disk and T is the deposition height.

As the type of the fiber, the fibers described in <Fiber> above can be adopted. From the viewpoint of specific strength and specific elastic modulus, a mass contained amount of the carbon fibers in all fibers of the particle-containing fiber bundle is preferably 70% by mass or more, more preferably 70% to 100% by mass, and still more preferably 90% to 100% by mass.

As the particles, the particles described in <Particles> above can be adopted. When containing the particles, it is possible to impart a function derived from the particles to the molding material or the molded body, or to easily impregnate the matrix resin into the fibers during the production of the molding material or during the molding. The particle size distribution of the particles in the particle-containing fiber bundle can be measured by washing the particle-containing fiber bundle with a solvent dissoluble the organic binder, separating the fibers and the particles by filtration or the like, and then measuring the particle size distribution by the method described in <Particles> above.

As the organic binder, the organic binders described in <Organic binder> above can be adopted. When containing the organic binder, the fibers can be bound to each other, and thus the shape of the particle-containing fiber bundle can be maintained.

In addition, the particle-containing fiber bundle may contain a filler such as silica, calcium silicate, alumina, calcium carbonate, talc, and barium sulfate; a flame retardant such as a phosphinic acid metal salt, aluminum hydroxide, and magnesium hydroxide; or a mold release agent such as silicone oil, a wetting dispersant, an antifoaming agent, a defoaming agent, natural waxes, synthetic waxes, a metal salt of a linear fatty acid, an acid amide, esters, and paraffins.

A mass contained amount of the fibers in the particle-containing fiber bundle can be, for example, 10% to 99% by mass. A volume contained amount of the fibers in the particle-containing fiber bundle can be, for example, 7% to 99% by volume.

When used for pellet production, the mass contained amount of the fibers in the particle-containing fiber bundle can be, for example, 80% to 99% by mass.

When the particle-containing fiber bundle is directly put into a molding die or the like and used for molding, the mass contained amount of the fibers in the particle-containing fiber bundle can be, for example, 10% to 70% by mass.

A mass contained amount of the entire particles in the particle-containing fiber bundle can be, for example, 20% to 80% by mass, and is preferably 30% to 70% by mass from the viewpoint of moldability and imparting functions.

When the thermoplastic resin particles or the thermosetting resin particles are used, the mass contained amount thereof can be 20% to 80% by mass.

When the curing agent particles or the inorganic particles are used, the mass contained amount thereof can be 1% to 70% by mass.

A mass contained amount of the organic binder in the particle-containing fiber bundle can be, for example, 0.1% to 90% by mass, and is preferably 0.5% to 20% by mass from the viewpoint of maintaining the shape of the fiber bundle.

A mass contained amount of the liquid in the particle-containing fiber bundle can be, for example, 5% by mass or less or 1% by mass or less, and the particle-containing fiber bundle may be dried so that the liquid is not contained.

From the viewpoint of use as a molding material, a moisture content (mass) of the particle-containing fiber bundle is preferably 5% by mass or less or 1% by mass or less.

From the viewpoint of uniformly dispersing the particles in the particle-containing fiber bundle, a mass ratio of the particles to the organic binder (mass of the particles/mass of the organic binder) in the particle-containing fiber bundle is preferably 2.5 to 100 and more preferably 5 to 50.

[Application]

The particle-containing fiber bundle produced by the above-described particle-containing fiber bundle production method can be used as a reinforcing fiber in a fiber-reinforced resin composition or a molding material such as various prepregs (random or unidirectional), pellets, and stampable sheets.

When the particle-containing fiber bundle is used as an intermediate material for molding, a molded body can be obtained by fusing a plurality of particle-containing fiber bundles with each other.

When organic particles are used as a matrix resin material, the adjacent particle-containing fiber bundles can be fused by melting the organic particles.

When the organic particles are contained as an additive, the adjacent particle-containing fiber bundles can be fused by melting or reacting the organic binder. Since the contained amount of the fiber serving as the reinforcing material can be adjusted, a thermoplastic resin or a thermosetting resin may be added during fusion welding. For example, a molded body is obtained by scattering a plurality of the particle-containing fiber bundles in a metal mold and compression-molding the particle-containing fiber bundles. The particle-containing fiber bundle can also be heated and fused without applying pressure in an oven or the like.

When the particle-containing fiber bundle is used as a fiber material contained in pellets, the pellets can be produced by melt-kneading a plurality of the particle-containing fiber bundles.

Examples of the production method of the pellets include a method of directly melt-kneading a plurality of the particle-containing fiber bundles without adding other components such as a resin; a method of melt-kneading a thermoplastic resin and the particle-containing fiber bundle after dry blending; and a method of supplying the particle-containing fiber bundle to a thermoplastic resin in a molten state and kneading the mixture.

In the melt-kneading, an extruder such as a single-screw extruder and a twinscrew extruder is used. The melt-kneading has an advantage that, when the above-described particle-containing fiber bundle is charged into a hopper attached to the extruder and the particle-containing fiber bundle is fed from the hopper to a kneading zone, bridge of the fiber can be suppressed.

The particle-containing fiber bundle can also be directly used as a raw material for injection molding, same as in the pellets.

Examples

Hereinafter, the present invention will be described in more detail based on Examples, but the present invention is not limited to Examples.

[Measurement and evaluation method]

Various measurement and evaluation methods were as follows.

<Particle size distribution>

A particle size distribution of particles was measured by suspending 0.1 g of the particles in 10 mL of an aqueous solution of 0.1% by mass of a surfactant, adding the suspension dropwise to a laser diffraction/scattering-type particle size distribution analyzer (HORIBA, Ltd.; LA-960V2, wet measurement, aqueous solvent) so that the transmittance was in a range of 65% to 95%, and irradiating the suspension with ultrasonic waves for 1 minute.

<Surface tension>

A surface tension of a bundling liquid at 23°C was measured using an automatic surface tension meter (Kyowa Interface Science Co., Ltd.; CBVP-A3, plate method).

<Viscosity>

A viscosity of the bundling liquid at 23°C was measured using a B-type rotational viscometer (Brookfield; LVDV-1 Pri, Spindle S61) at a rotation speed of 50 rpm.

<Length of fiber bundle>

A fiber bundle was disposed on a white plate, and an image obtained by imaging the fiber bundle from a vertical direction opposite to the white plate was binarized using image analysis software, ImageJ (Wayne Rasband), and a Feret diameter of the fiber bundle was measured. An average of the Feret diameters of 60 or more fiber bundles was obtained and used as the length of the fiber bundle.

<Standard deviation of length of fiber bundle and coefficient of variation CV>

The Feret diameters of 60 or more fiber bundles were measured by the same method as the length of the fiber bundle, and the average $\mu$ and the standard deviation $\sigma$ of the Feret diameters were obtained. As shown in the following expression, the coefficient of variation CV was obtained by dividing the standard deviation $\sigma$ by the average $\mu$.

$$CV = \sigma/\mu$$

[Example 1]

As raw material fibers, carbon fibers (trade name: Pyrofil Chopped Fiber TR03CM, manufactured by Mitsubishi Chemical Corporation, average fiber length: 3.1 mm) were used. As particles, PEEK particles (trade name: KetaSpire KT-800SFP, manufactured by SOLVAY, powder, median diameter: 27.4 $\mu$m) were used.

First, 350 g of the carbon fibers and 250 g of the PEEK particles were put into an agitation granulator (trade name: SP Granulator SPG25T, manufactured by DALTON Corporation, device volume: 25 liters, inclination angle $\theta$ of agitation blade: 30°, diameter of agitation blade: 396 mm). Next, 480 g of a bundling liquid (surface tension at 23°C: 57.7 mN/m, viscosity at 23°C: 0.003 Pa·s) in which 462 g of water as a liquid and 18 g of a polyamide resin as an organic binder were mixed was put into the agitation granulator, and the mixture was agitated at an agitation blade speed of 400 rpm (circumferential speed of agitation blade: 8 m/sec) and a chopper speed of 3,000 rpm (circumferential speed of chopper: 11 m/sec) for 6 minutes to mix the components, thereby obtaining a particle-containing fiber bundle W1 containing a liquid.

The particle-containing fiber bundle W1 was dried in a box type dryer at 120°C for 2 hours to obtain a particle-containing fiber bundle P1 having a prolate spheroidal shape shown in FIG. 5 with a length of the fiber bundle of 4.5 mm.

Table 1A shows the length, the standard deviation, the coefficient of variation CV of the fiber bundle when 179 particle-containing fiber bundles P1 were measured. In the particle-containing fiber bundle P1, particles were present on the surface of the fiber bundle as shown in FIG. 6. When the particle-containing fiber bundle P1 was torn to observe the internal state, the particles were uniformly present inside the fiber bundle as shown in FIG. 7.

[Example 2]

A particle-containing fiber bundle P2 having a prolate spheroidal shape with a length of the fiber bundle of 5.3 mm was obtained in the same manner as in Example 1, except that the amount of the carbon fibers used was changed to 383 g and 217 g of PA11 particles 1 (trade name: RILSAN-ES, manufactured by ALKEMA, powder, median diameter: 32.9 $\mu$m) were used instead of the PEEK particles.

Table 1A shows the length, the standard deviation, the coefficient of variation CV of the fiber bundle when 156 particle-containing fiber bundles P2 were measured.

[Example 3]

A particle-containing fiber bundle P3 having a prolate spheroidal shape with a length of the fiber bundle of 4.4 mm was obtained in the same manner as in Example 1, except that the amount of the carbon fibers used was changed to 369 g and 231 g of PA10T particles 1 (median diameter: 92.2 $\mu$m) were used instead of the PEEK particles. The PA10T particles 1 were obtained by removing coarse powder of PA10T particles (trade name: XecoT-XN500, manufactured by Unitika Ltd., powder, median diameter: 192 $\mu$m) using a sieve (trade name: electromagnetic shaker A-3, manufactured by FRITSCH Japan Co., Ltd.) having an opening size of 250 $\mu$m.

Table 1A shows the length, the standard deviation, the coefficient of variation CV of the fiber bundle when 153 particle-containing fiber bundles P3 were measured.

[Comparative Example 1]

A particle-containing fiber bundle P4 having an irregular shape with a length of the fiber bundle of 8.4 mm was obtained in the same manner as in Example 2, except that the PA11 particles 1 were replaced with PA11 particles 2 (trade name: RILSAN-T, manufactured by ALKEMA, powder, median diameter: 111.6 $\mu$m).
Table 1B shows the length, the standard deviation, the coefficient of variation CV of the fiber bundle when 67 particle-containing fiber bundles P4 were measured.

[Comparative Example 2]

A particle-containing fiber bundle P5 having an irregular shape with a length of the fiber bundle of 9.4 mm was obtained in the same manner as in Example 3, except that the PA10T particles 1 were replaced with PA10T particles 2 (median diameter: 176.3 $\mu$m). The PA10T particles 2 were obtained by removing coarse powder of PA10T particles (trade name: XecoT-XN500, manufactured by Unitika Ltd., powder, median diameter: 192 $\mu$m) using a sieve (trade name: electromagnetic shaker A-3, manufactured by FRITSCH Japan Co., Ltd.) having an opening size of 500 $\mu$m.
Table 1B shows the length, the standard deviation, the coefficient of variation CV of the fiber bundle when 67 particle-containing fiber bundles P5 were measured.

[Example 4]

As raw material fibers, carbon fibers (trade name: Pyrofil Chopped Fiber TR03CM, manufactured by Mitsubishi Chemical Corporation, average fiber length: 3.1 mm) were used. As particles, glass beads (trade name: EJ-2500, manufactured by Potters-Ballotini Co.,Ltd., powder, median diameter: 4.9 $\mu$m) were used.
First, 84 g of the carbon fibers and 116 g of the glass beads were put into an agitation granulator (trade name: Henschel mixer FM10B, manufactured by MITSUI MIIKE MACHINERY, device volume: 9 liters). Next, 160 g of a bundling liquid (surface tension at 23°C: 57.7 mN/m, viscosity at 23°C: 0.003 Pa·s) in which 154 g of water as a liquid and 6 g of a polyamide resin as an organic binder were mixed was put into the agitation granulator, and the mixture was agitated at an agitation blade speed of 1,195 rpm (circumferential speed of agitation blade: 13 m/sec) for 2 minutes to mix the components, thereby obtaining a particle-containing fiber bundle W2 containing a liquid.
The fiber bundle W2 was dried in a box type dryer at 120°C for 2 hours to obtain a particle-containing fiber bundle P6 having a prolate spheroidal shape with a length of the fiber bundle of 11.7 mm.
Table **1B** shows the length, the standard deviation, the coefficient of variation CV of the fiber bundle when 60 particle-containing fiber bundles P6 were measured.

[Example 5]

A particle-containing fiber bundle P7 having a prolate spheroidal shape with a length of the fiber bundle of 12.2 mm was obtained in the same manner as in Example 4, except that the glass beads were replaced with glass beads (trade name: J-800, manufactured by Potters-Ballotini Co.,Ltd., powder, median diameter: 24.6 $\mu$m).
Table 1B shows the length, the standard deviation, the coefficient of variation CV of the fiber bundle when 112 particle-containing fiber bundles P7 were measured.

[Example 6]

A particle-containing fiber bundle P8 having a prolate spheroidal shape with a length of the fiber bundle of 12.6 mm was obtained in the same manner as in Example 4, except that the glass beads were replaced with glass beads (trade name: J-320, manufactured by Potters-Ballotini Co.,Ltd., powder, median diameter: 51 $\mu$m).
Table 1B shows the length, the standard deviation, the coefficient of variation CV of the fiber bundle when 73 particle-containing fiber bundles P8 were measured.

[Examples 7 to 10]

Particle-containing fiber bundles P9 to P12 having a prolate spheroidal shape with a length of the fiber bundle shown in Table 1A were obtained in the same manner as in Example 1, except that the amounts of the raw material fibers, the particles, the liquid, and the organic binder used were changed as shown in Table 1A.
Table 1A shows the length, the standard deviation, the coefficient of variation CV of the fiber bundle when the particle-containing fiber bundles P9 to P12 were measured.

[Table 1A]

| | | Example | | | | | | |
|---|---|---|---|---|---|---|---|---|
| | | 1 | 7 | 8 | 9 | 10 | 2 | 3 |
| Raw material fibers | Type | Carbon fibers | Carbon fibers | Carbon fibers | Carbon fibers | Carbon fibers | Carbon fibers | Carbon fibers |
| | Average fiber length (mm) | 3.1 | 3.1 | 3.1 | 3.1 | 3.1 | 3.1 | 3.1 |
| | Average fiber diameter ($\mu$m) | 7.0 | 7.0 | 7.0 | 7.0 | 7.0 | 7.0 | 7.0 |
| | Mass (g) | 350 | 133 | 154 | 167 | 182 | 383 | 369 |
| Particles | Type | PEEK particles | PEEK particles | PEEK particles | PEEK particles | PEEK particles | PA11 particles | PA10T particles |
| | Mass (g) | 250 | 67 | 46 | 33 | 18 | 217 | 231 |
| | Mass (g/100 g of fibers) | 71 | 50 | 30 | 20 | 10 | 57 | 63 |
| | Mass ratio (/organic binder) | 49 | 15 | 12 | 9 | 5 | 46 | 47 |
| | D10 ($\mu$m) | 17.4 | 17.4 | 17.4 | 17.4 | 17.4 | 20.0 | 11.8 |
| | Median diameter D50 ($\mu$m) | 27.4 | 27.4 | 27.4 | 27.4 | 27.4 | 32.9 | 92.2 |
| | D90 ($\mu$m) | 44.5 | 44.5 | 44.5 | 44.5 | 44.5 | 52.9 | 219.9 |
| | D75/D25 | 1.6 | 1.6 | 1.6 | 1.6 | 1.6 | 1.7 | 9.7 |
| | (D84 - D16)/2 ($\mu$m) | 10.1 | 10.1 | 10.1 | 10.1 | 10.1 | 12.5 | 91.7 |
| Organic binder | Mass (g) | 18 | 6 | 6 | 6 | 6 | 18 | 18 |
| | Mass (g/100 g of fibers) | 5 | 5 | 4 | 4 | 3 | 5 | 5 |
| Liquid | Mass (g) | 462 | 154 | 154 | 154 | 154 | 462 | 462 |
| | Mass (g/100 g of fibers) | 132 | 116 | 100 | 92 | 85 | 121 | 125 |
| Average fiber length of raw material fibers ($\mu$m)/median diameter ($\mu$m) | | 113 | 113 | 113 | 113 | 113 | 94 | 34 |
| Average fiber diameter of raw material fibers ($\mu$m)/median diameter ($\mu$m) | | 0.26 | 0.26 | 0.26 | 0.26 | 0.26 | 0.21 | 0.08 |

(continued)

| | | Example | | | | | | |
|---|---|---|---|---|---|---|---|---|
| | | 1 | 7 | 8 | 9 | 10 | 2 | 3 |
| Properties of fiber bundle | Shape | Prolate spheroidal shape | Prolate spheroidal shape | Prolate spheroidal shape | Prolate spheroidal shape | Prolate spheroidal shape | Prolate spheroidal shape | Prolate spheroidal shape |
| | Length of fiber bundle (mm) | 4.5 | 5.2 | 5.6 | 6.3 | 9.2 | 5.3 | 4.4 |
| Shape uniformity | Standard deviation of length of fiber bundle (mm) | 1.4 | 1.2 | 1.1 | 1.2 | 2.0 | 1.4 | 0.9 |
| | Length of fiber bundle coefficient of variation CV | 0.31 | 0.23 | 0.21 | 0.19 | 0.22 | 0.26 | 0.20 |

[Table 1B]

| | | Comparative Example | | Example | | |
|---|---|---|---|---|---|---|
| | | 1 | 2 | 4 | 5 | 6 |
| Raw material fibers | Type | Carbon fibers | Carbon fibers | Carbon fibers | Carbon fibers | Carbon fibers |
| | Average fiber length (mm) | 3.1 | 3.1 | 3.1 | 3.1 | 3.1 |
| | Average fiber diameter ($\mu$m) | 7.0 | 7.0 | 7.0 | 7.0 | 7.0 |
| | Mass (g) | 383 | 369 | 84 | 84 | 84 |
| Particles | Type | PA11 particles | PA10T particles | Glass beads | Glass beads | Glass beads |
| | Mass (g) | 217 | 231 | 116 | 116 | 116 |
| | Mass (g/100 g of fibers) | 57 | 63 | 137 | 137 | 137 |
| | Mass ratio (/organic binder) | 46 | 47 | 16 | 16 | 16 |
| | D10 ($\mu$m) | 61.8 | 14.0 | 2.6 | 15.2 | 38.2 |
| | Median diameter D50 ($\mu$m) | 111.6 | 176.3 | 4.9 | 24.6 | 51.2 |
| | D90 ($\mu$m) | 192.1 | 346.4 | 10.6 | 38.5 | 70.7 |
| | D75/D25 | 1.8 | 11.1 | 2.0 | 1.6 | 1.4 |
| | (D84 - D16)/2 ($\mu$m) | 49.4 | 143.4 | 2.8 | 8.7 | 13.0 |
| Organic binder | Mass (g) | 18 | 18 | 6 | 6 | 6 |
| | Mass (g/100 g of fibers) | 5 | 5 | 7 | 7 | 7 |
| Liquid | Mass (g) | 462 | 462 | 154 | 154 | 154 |
| | Mass (g/100 g of fibers) | 121 | 125 | 183 | 183 | 183 |

(continued)

| | | Comparative Example | | Example | | |
|---|---|---|---|---|---|---|
| | | 1 | 2 | 4 | 5 | 6 |
| Average fiber length of raw material fibers (μm)/median diameter (μm) | | 28 | 18 | 634 | 126 | 61 |
| Average fiber diameter of raw material fibers (μm)/median diameter (μm) | | 0.06 | 0.04 | 1.43 | 0.28 | 0.14 |
| Properties of fiber bundle | Shape | Irregular shape | Irregular shape | Prolate spheroidal shape | Prolate spheroidal shape | Prolate spheroidal shape |
| | Length of fiber bundle (mm) | 8.4 | 9.4 | 11.7 | 12.2 | 12.6 |
| Shape uniformity | Standard deviation of length of fiber bundle (mm) | 3.6 | 4.1 | 3.8 | 3.6 | 4.0 |
| | Length of fiber bundle coefficient of variation CV | 0.43 | 0.44 | 0.32 | 0.30 | 0.32 |

As is clear from the results in Table 1, in Examples 1 to 10, a particle-containing fiber bundle having a prolate spheroidal shape was obtained, and the CV, which is an index indicating uniformity of the length of the fiber bundle, was 0.19 to 0.32. In Comparative Examples 1 and 2, a particle-containing fiber bundle having an irregular shape was obtained under the same agitation conditions as in Examples 1 to 3, and the CV was more than 0.43.

Reference Signs List

1: agitation tank
2: rotating shaft
3: agitation blade
40: container
42: rotating shaft portion
44: agitation blade
45: scraper

**Claims**

1. A particle-containing fiber bundle production method of a particle-containing fiber bundle having a prolate spheroidal shape or a strand shape, the production method comprising:

   a step of mixing a plurality of shortened fibers, particles having a median diameter of 100 μm or less, an organic binder, and a liquid,
   wherein the fibers include carbon fibers, and
   the particles are used in an amount of 10 parts by mass or more with respect to 100 parts by mass of the fibers.

2. The particle-containing fiber bundle production method according to Claim 1,
   wherein the median diameter of the particles is 3 μm or more.

3. The particle-containing fiber bundle production method according to Claim 1,
   wherein a solubility of the particles in the liquid is 0.01 g/100 g or less.

4. The particle-containing fiber bundle production method according to Claim 1,
   wherein a solubility of the particles in water is 0.0001 g/100 g or less.

5. The particle-containing fiber bundle production method according to Claim 4,
wherein a solubility of the organic binder in water is more than 0.001 g/100 g.

6. The particle-containing fiber bundle production method according to Claim 1,
wherein the particles include organic particles.

7. The particle-containing fiber bundle production method according to Claim 1,
wherein the particles are used in an amount of 20 parts by mass or more and 80 parts by mass or less with respect to 100 parts by mass of the fibers.

8. The particle-containing fiber bundle production method according to Claim 1,
wherein the particles are used in an amount of 55 parts by mass or more and 75 parts by mass or less with respect to 100 parts by mass of the fibers.

9. The particle-containing fiber bundle production method according to Claim 1,
wherein the organic binder includes at least one resin selected from the group consisting of a polyamide resin, an epoxy resin, an unsaturated polyester resin, a vinyl ester resin, and a polyurethane resin.

10. The particle-containing fiber bundle production method according to Claim 6,
wherein the organic particles include thermoplastic resin particles.

11. The particle-containing fiber bundle production method according to Claim 10,
wherein the thermoplastic resin particles include at least one selected from the group consisting of a polyamide resin, a polyolefin resin, a polyester resin, a polycarbonate resin, a polyether sulfone resin, a polyether ether ketone resin, a polyether imide resin, and a polyphenylene sulfide resin.

12. The particle-containing fiber bundle production method according to Claim 6,
wherein the organic particles include thermosetting resin particles.

13. The particle-containing fiber bundle production method according to Claim 12,
wherein the thermosetting resin particles include at least one selected from the group consisting of an epoxy resin, a vinyl ester resin, an unsaturated polyester resin, a cyanate ester resin, a polyimide resin, a maleimide resin, a silicone resin, a melamine resin, a urea resin, an alkyd resin, a urethane resin, and a phenol resin.

14. The particle-containing fiber bundle production method according to Claim 6,
wherein the organic particles include curing agent particles.

15. The particle-containing fiber bundle production method according to Claim 14,
wherein the curing agent particles include at least one selected from the group consisting of dicyandiamides, phenols, amines, carboxylic acid anhydrides, thiols, imidazoles, phosphines, peroxides, and organometallic salts.

16. The particle-containing fiber bundle production method according to Claim 1,
wherein the particles include inorganic particles.

17. The particle-containing fiber bundle production method according to Claim 16,
wherein the inorganic particles include at least one selected from the group consisting of metal particles, metal oxide particles, silica particles, silicate particles, carbonate particles, sulfate particles, hydroxide particles, glass particles, ceramic particles, graphite, and carbon black.

18. The particle-containing fiber bundle production method according to Claim 1,
wherein a particle diameter D90 at which an integrated value of the particles in a volume-based particle size distribution is 90% is 250 $\mu$m or less.

19. The particle-containing fiber bundle production method according to Claim 1,
wherein a particle diameter D10 at which an integrated value of the particles in a volume-based particle size distribution is 10% is 50 $\mu$m or less.

20. The particle-containing fiber bundle production method according to Claim 1,

wherein a particle diameter D90 at which an integrated value of the particles in a volume-based particle size distribution is 90% is 0.5 μm or more.

21. The particle-containing fiber bundle production method according to Claim 1,
wherein a particle diameter D10 at which an integrated value of the particles in a volume-based particle size distribution is 10% is 0.05 μm or more.

22. The particle-containing fiber bundle production method according to Claim 1,
wherein a ratio (D75/D25) of a particle diameter D75 at which an integrated value of the particles in a volume-based particle size distribution is 75% to a particle diameter D25 at which the integrated value is 25% is 1 to 15.

23. The particle-containing fiber bundle production method according to Claim 1,
wherein a fiber cotton containing the fiber is used.

24. The particle-containing fiber bundle production method according to Claim 1,
wherein an agitation granulator is used.

25. The particle-containing fiber bundle production method according to Claim 24,
wherein the agitation granulator includes an agitation tank.

26. The particle-containing fiber bundle production method according to Claim 25,
wherein an agitation blade is provided inside the agitation tank.

27. The particle-containing fiber bundle production method according to Claim 25,
wherein the agitation tank includes a scraper.

28. The particle-containing fiber bundle production method according to Claim 26,
wherein a distance between a bottom surface of the agitation blade and a bottom surface of the agitation tank is 1 mm or less.

29. The particle-containing fiber bundle production method according to Claim 26,
wherein a distance between a tip of the agitation blade and a wall surface of the agitation tank is 10 mm or more.

30. The particle-containing fiber bundle production method according to Claim 25,
wherein the agitation tank is rotated.

31. The particle-containing fiber bundle production method according to Claim 1,
wherein an average fiber length of the fibers is 12 to 50 mm.

32. The particle-containing fiber bundle production method according to Claim 1,
wherein an average fiber length of the fibers is 2 to 12 mm.

33. The particle-containing fiber bundle production method according to Claim 1,
wherein a bulk density of the fibers is 0.01 to 0.1 g/cm$^3$.

34. The particle-containing fiber bundle production method according to Claim 1,
wherein positions of tips of the fibers constituting the particle-containing fiber bundle are irregular.

35. The particle-containing fiber bundle production method according to Claim 1,
wherein a length of the particle-containing fiber bundle is longer than an average fiber length of the fibers contained in the particle-containing fiber bundle.

36. The particle-containing fiber bundle production method according to Claim 1, further comprising:
mixing the particles, the organic binder, and the liquid to obtain a mixture 1, and mixing the mixture 1 and the fibers to obtain a mixture 2.

37. The particle-containing fiber bundle production method according to Claim 1, further comprising:
removing the liquid.

**38.** The particle-containing fiber bundle production method according to Claim 1,
wherein the liquid is used in an amount of 60 to 200 parts by mass with respect to 100 parts by mass of the fibers.

**39.** The particle-containing fiber bundle production method according to Claim 1,
wherein the organic binder is used in an amount of 1 to 40 parts by mass with respect to 100 parts by mass of the fibers.

**40.** The particle-containing fiber bundle production method according to Claim 1,
wherein the particles and the organic binder are used with a mass ratio (mass of particles/mass of organic binder) of the particles to the organic binder being 2.5 to 100.

**41.** A particle-containing fiber bundle having a prolate spheroidal shape or a strand shape, comprising:

a plurality of shortened fibers;
particles having a median diameter of 100 μm or less; and
an organic binder,
wherein the fibers include carbon fibers, and
the particles are contained in an amount of 10 parts by mass or more with respect to 100 parts by mass of the fibers.

**42.** The particle-containing fiber bundle according to Claim 41,
wherein the fibers are aligned.

**43.** The particle-containing fiber bundle according to Claim 41,
wherein the particles include organic particles.

**44.** The particle-containing fiber bundle according to Claim 41,
wherein the median diameter of the particles is 3 μm or more.

**45.** The particle-containing fiber bundle according to Claim 41,
wherein an average fiber length of the fibers is 12 to 50 mm.

**46.** The particle-containing fiber bundle according to Claim 41,
wherein an average fiber length of the fibers is 2 to 12 mm.

**47.** The particle-containing fiber bundle according to Claim 41,
wherein positions of tips of the fibers constituting the particle-containing fiber bundle are irregular.

**48.** The particle-containing fiber bundle according to Claim 41,
wherein a length of the particle-containing fiber bundle is longer than an average fiber length of the fibers contained in the particle-containing fiber bundle.

**49.** The particle-containing fiber bundle according to Claim 41,
wherein a ratio of a length of the particle-containing fiber bundle to an average fiber length of the fibers contained in the particle-containing fiber bundle (length of particle-containing fiber bundle/average fiber length of fibers contained in particle-containing fiber bundle) is 1.1 to 2.5.

**50.** The particle-containing fiber bundle according to Claim 41,
wherein a mass contained amount of the particles in the particle-containing fiber bundle is 20% to 80% by mass.

**51.** The particle-containing fiber bundle according to Claim 41,
wherein a mass contained amount of the organic binder in the particle-containing fiber bundle is 0.5% to 20% by mass.

**52.** The particle-containing fiber bundle according to Claim 41,
wherein a mass ratio (mass of particles/mass of organic binder) of the particles to the organic binder in the particle-containing fiber bundle is 2.5 to 100.

**53.** The particle-containing fiber bundle according to Claim 41,
wherein the fibers include recycled fibers.

FIG. 1A

FIG. 1B

FIG. 2

FIG. 3

FIG. 4

FIG. 5

## FIG. 6

## FIG. 7

## INTERNATIONAL SEARCH REPORT

| International application No. |
| --- |
| **PCT/JP2023/044781** |

**A. CLASSIFICATION OF SUBJECT MATTER**

*B29B 9/14*(2006.01)i; *B01J 2/10*(2006.01)i; *B01J 2/12*(2006.01)i; *B01J 2/28*(2006.01)i; *B29B 9/08*(2006.01)i; *C08J 5/04*(2006.01)i; *C08K 3/013*(2018.01)i; *C08K 7/02*(2006.01)i; *C08L 101/00*(2006.01)i; *D01G 9/02*(2006.01)i; *D06M 101/40*(2006.01)n

FI:   B29B9/14; B01J2/10 Z; B01J2/12; B01J2/28; B29B9/08; C08J5/04 CEZ; C08K3/013; C08K7/02; C08L101/00; D01G9/02; D06M101:40

According to International Patent Classification (IPC) or to both national classification and IPC

**B. FIELDS SEARCHED**

Minimum documentation searched (classification system followed by classification symbols)

B29B9/14; B01J2/10; B01J2/12; B01J2/28; B29B9/08; C08J5/04; C08K3/013; C08K7/02; C08L101/00; D01G9/02; D06M101/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2013/172318 A1 (TEIJIN LIMITED) 21 November 2013 (2013-11-21) | 1-53 |
| A | WO 2022/210591 A1 (TEIJIN LIMITED) 06 October 2022 (2022-10-06) | 1-53 |
| A | JP 2-105860 A (OSAKA GAS CO., LTD.) 18 April 1990 (1990-04-18) | 1-53 |
| A | JP 2-125706 A (TOHO RAYON CO., LTD.) 14 May 1990 (1990-05-14) | 1-53 |
| A | JP 1-282364 A (ASAHI CHEM. IND. CO., LTD.) 14 November 1989 (1989-11-14) | 1-53 |
| A | JP 7-332414 A (TOYOTA JIDOSHA KABUSHIKI KAISHA) 22 December 1995 (1995-12-22) | 1-53 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 February 2024** | **27 February 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2023/044781**

| Patent document cited in search report | | | Publication date (day/month/year) | Patent family member(s) | | | Publication date (day/month/year) |
|---|---|---|---|---|---|---|---|
| WO | 2013/172318 | A1 | 21 November 2013 | US | 2015/0133598 | A1 | |
| | | | | EP | 2851464 | A1 | |
| | | | | CN | 104302828 | A | |
| | | | | KR | 10-2015-0008868 | A | |
| WO | 2022/210591 | A1 | 06 October 2022 | JP | 2022-156823 | A | |
| | | | | JP | 2022-170581 | A | |
| | | | | CN | 117136127 | A | |
| JP | 2-105860 | A | 18 April 1990 | (Family: none) | | | |
| JP | 2-125706 | A | 14 May 1990 | (Family: none) | | | |
| JP | 1-282364 | A | 14 November 1989 | (Family: none) | | | |
| JP | 7-332414 | A | 22 December 1995 | (Family: none) | | | |

Form PCT/ISA/210 (patent family annex) (July 2022)

**REFERENCES CITED IN THE DESCRIPTION**

**Patent documents cited in the description**

- JP 2022200735 A
- JP 2022201050 A
- JP H10503812 W
- EP 2902433 A
- WO 2022210591 A